# EUROPÄISCHE PATENTSCHRIFT

(11) **EP 4 505 155 B1**
(45) Veröffentlichungstag und Bekanntmachung des Hinweises auf die Patenterteilung: **20.08.2025**
(21) Anmeldenummer: 23715473.7
(22) Anmeldetag: 24.03.2023
(51) Int. Cl.: G01L 9/00, G01L 11/02, G02B 6/293

(54) **SENSORVORRICHTUNG ZU EINER MESSUNG EINES FLUIDDRUCKS UND VERFAHREN ZU EINER HERSTELLUNG EINER SENSORVORRICHTUNG**
SENSOR DEVICE FOR MEASURING A FLUID PRESSURE, AND METHOD FOR MANUFACTURING A SENSOR DEVICE
DISPOSITIF DE DÉTECTION POUR MESURER UNE PRESSION DE FLUIDE ET PROCÉDÉ DE FABRICATION D'UN DISPOSITIF DE DÉTECTION

(30) Priorität: 25.03.2022 DE 102022107179
(43) Veröffentlichungstag der Anmeldung: 12.02.2025
(73) Patentinhaber: PROF. DR. CARLO RABAIOTTI OST - OSTSCHWEIZER FACHHOCHSCHULE, 8640 Rapperswil (CH)
(72) Erfinder: RABAIOTTI, Carlo, 8125 Zollikerberg (CH); HÖTTGES, Alessio, 8050 Zürich (CH); FACCHINI, Massimo, 8004 Zürich (CH); SCHWENDEMANN, Daniel, 88630 Pfullendorf (DE); WALKER, Silvan, 8852 Altendorf (CH)
(74) Vertreter: Daub, Thomas
(86) Internationale Anmeldenummer: PCT/EP2023/057677
(87) Internationale Veröffentlichungsnummer: WO 2023/180544

(56) Entgegenhaltungen:
- GB-A- 2 303 445
- US-A- 4 524 436
- US-A1- 2013 034 324
- US-B2- 6 882 595

## Beschreibung

### Stand der Technik

Die Erfindung betrifft eine Sensorvorrichtung zumindest zu einer Messung eines Fluiddrucks nach dem Oberbegriff des Anspruchs 1, ein Sensorsystem nach dem Anspruch 13, eine Verwendung der Sensorvorrichtung nach dem Anspruch 14 und ein Verfahren zu einer Herstellung der Sensorvorrichtung nach dem Anspruch 15.

Es ist bereits eine Sensorvorrichtung zu einer Messung eines Drucks, mit einem Grundkörper und mit einer faseroptischen Sensoreinheit, die zumindest ein als lichtleitende Faser ausgebildetes Sensorelement umfasst, welches sich entlang einer Längserstreckung des Grundkörpers zumindest im Wesentlichen helixartig um den Grundkörper erstreckt, vorgeschlagen worden.

Die Aufgabe der Erfindung besteht insbesondere darin, eine gattungsgemäße Vorrichtung mit verbesserten Eigenschaften hinsichtlich einer Messgenauigkeit und/oder eines, insbesondere spezifischen, Messverfahrens bereitzustellen. Die Aufgabe wird erfindungsgemäß durch die Merkmale der Patentansprüche 1, 13, 14 und 15 gelöst, während vorteilhafte Ausgestaltungen und Weiterbildungen der Erfindung den Unteransprüchen entnommen werden können.

Bekannte faseroptische Drucksensoren sind in den Dokumenten US 6 882 595 B2 und GB 2 303 445 A offenbart.

### Vorteile/Offenbarung der Erfindung

Die Erfindung geht aus von einer Sensorvorrichtung zumindest zu einer Messung eines Fluiddrucks, mit einem Grundkörper und mit einer faseroptischen Sensoreinheit, die zumindest ein als lichtleitende Faser ausgebildetes Sensorelement umfasst, welches sich entlang einer Längserstreckung des Grundkörpers zumindest abschnittsweise zumindest im Wesentlichen helixartig um den Grundkörper erstreckt.

Es wird vorgeschlagen, dass die Sensorvorrichtung eine Übertragungseinheit aufweist, die in zumindest einem Messbereich um den Grundkörper und das zumindest eine Sensorelement angeordnet ist und dazu vorgesehen ist, ein Fluid aus einer Umgebung aufzunehmen und einen Fluiddruck zu einer Deformation des zumindest einen Sensorelements auf die Sensoreinheit zu übertragen. Vorteilhaft kann der Fluiddruck dadurch in der Umgebung, insbesondere in einem Boden, unabhängig von einem mechanischen Druck eines von einem Fluid verschiedenen Stoffs, insbesondere eines Festkörpers, beispielsweise eines Gesteins oder einer Erde des Bodens, ermittelt werden. Besonders vorteilhaft kann eine besonders hohe Messgenauigkeit erreicht werden. Insbesondere ist der Grundkörper durch ein, insbesondere formstabiles, beispielsweise rundes oder polygonales, vorzugsweise axial erstrecktes, Hohlprofil, insbesondere ein Rohr oder ein Schlauch, gebildet. Insbesondere ist der Grundkörper dazu vorgesehen, die Sensoreinheit an einem Außendurchmesser des Grundkörpers aufzunehmen und/oder zu führen und/oder zu positionieren. Vorzugsweise ist der Grundkörper durch eine Druckbeaufschlagung, insbesondere den Fluiddruck, deformierbar ausgeführt.

Deformierbar soll in diesem Zusammenhang insbesondere bedeuten, dass aufgrund einer Druckbeaufschlagung, insbesondere Fluiddruckbeaufschlagung, eine Veränderung der geometrischen Größe, insbesondere des Durchmessers und/oder der Länge, erfolgt / ermöglicht ist. Insbesondere ist der Grundkörper in einem Inneren zumindest teilweise hohl ausgebildet. Es ist jedoch denkbar, dass in dem Inneren eine elastische Füllung, insbesondere ein Schaumstoff und/oder ein Elastomer, angeordnet ist. Insbesondere könnte der Grundkörper als Vollkörper ausgebildet sein. Insbesondere könnte der Grundkörper vollständig aus dem Schaumstoff ausgebildet sein. Es ist auch denkbar, dass der Grundkörper aus zwei oder mehr, insbesondere geschachtelten, Hohlprofilen ausgebildet ist, wobei vorzugsweise ein Außendurchmesser eines inneren Hohlprofils im Wesentlichen den Innendurchmesser eines äußeren Hohlprofils aufweist. Es ist denkbar, dass die Kontaktflächen zwischen den Hohlprofilen und/oder der Schaumstofffüllung zumindest im Wesentlichen mit einem Haftvermittler verbunden sind. Vorzugsweise weist der Grundkörper, insbesondere das Hohlprofil, vorzugsweise das Rohr, eine Wandstärke von wenigstens 0,5 mm, vorzugsweise wenigstens 1 mm, bevorzugt wenigstens 2 mm, vorteilhaft wenigstens 4 mm und besonders bevorzugt höchstens 10 mm auf. Vorzugsweise weist der Grundkörper einen Außendurchmesser von wenigstens 3 mm, vorzugsweise wenigstens 6 mm, bevorzugt wenigstens 8 mm, vorteilhaft wenigstens 12 mm, besonders vorteilhaft wenigstens 18 mm und besonders bevorzugt höchstens 25 mm auf. Vorzugsweise ist der Grundkörper, insbesondere das Hohlprofil, bevorzugt das Rohr, aus einem elastisch verformbaren Kunststoff, insbesondere aus einem thermoplastischen Elastomer, und/oder einem elastisch verformbaren metallischen Werkstoff, insbesondere Aluminium oder Stahl, ausgebildet. Es ist auch denkbar, dass der Grundkörper aus einem elastisch verformbaren Verbundwerkstoff (composite material), insbesondere einem Kohlefaserverbundwerkstoff, ausgebildet ist. Vorzugsweise weist der Werkstoff des Grundkörpers eine niedrige Steifigkeit, insbesondere mit einem E-Modul kleiner als 210.000 Megapascal, vorzugsweise kleiner als 100.000 Megapascal, vorteilhaft kleiner als 10.000 Megapascal, besonders vorteilhaft kleiner als 1.000 Megapascal, bevorzugt kleiner als 100 Megapascal und besonders bevorzugt größer als 1 Megapascal auf. Insbesondere besitzt der Werkstoff des Grundkörpers zumindest in einem Temperaturbereich von -50 °C bis +300 °C eine ausgeprägte Elastizität. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Die lichtleitende Faser kann als eine kunststoffummantelte Glasfaser, insbesondere Glasfaser, ausgebildet sein. Alternative Fasermaterialien, wie Kunststoffe (POF polymere optische Fasern) oder Photonic-Crystal Fiber (PCF) sind ebenfalls denkbar. Insbesondere wird ein in die lichtleitende Faser eingebrachtes Licht, insbesondere gepulstes oder kontinuierliches Licht, gestreut, insbesondere zurückgestreut. Das zurückgestreute Signal kann dann als Messsignal dienen. Insbesondere ist die Rückstreuung der lichtleitenden Faser abhängig von einem Dehnungs- und/oder Stauchungszustand der lichtleitenden Faser. Dadurch kann vorteilhaft auf eine druckbedingte Dehnung und/oder Stauchung der lichtleitenden Faser des in den Boden eingebrachten Sensorelements und damit auf einen am Messort herrschenden Druck, insbesondere Fluiddruck, geschlossen werden. Dabei ist denkbar, dass in Längsrichtung der lichtleitenden Faser, insbesondere in definierten Abständen, Interferenzmuster, die auch als Fiber Bragg Grating (FBG) bezeichnet werden, eingebracht sind, welche ein in die lichtleitende Faser eingebrachtes Licht einer definierten Wellenlänge reflektieren. Insbesondere führt in diesem Fall eine Dehnung und/oder Stauchung der Glasfaser zu einer Längenänderung der Abstände zwischen den Interferenzmustern, oder zu einer Änderung der optischen Eigenschaften der einzelnen Interferenzmuster, welche ein Messsignal, insbesondere die Wellenlänge des reflektierten Lichts, verändern. Prinzipiell ist jedoch auch eine von Interferenzmustern unabhängige Streuung der lichtleitenden Faser zur Ermittlung des Messsignals anwendbar. Die lichtleitende Faser kann also auch frei von Interferenzmustern ausgebildet sein. Es ist denkbar, dass eine Sensoreinheit mehrere Sensorelemente, insbesondere mehrere lichtleitende Glasfasern, aufweist.

Vorzugsweises ist an einem Außenumfang des Grundkörpers das Sensorelement helixartig angeordnet. Unter der Wendung "helixartig" soll dabei insbesondere unter einem Winkel zur Umfangsrichtung des Grundkörpers um einen Umfang des Grundkörpers verlaufend verstanden werden. Dabei kann ein Vorzeichen des Winkels zur Umfangsrichtung des Grundkörpers positiv oder negativ ausgebildet sein. Insbesondere definiert das Vorzeichen des Winkels zur Umfangsrichtung des Grundkörpers, ob eine Wicklungsrichtung der Helixform links- oder rechtsgerichtet ausgebildet ist. Insbesondere bedeutet helixartig auch spiralförmig und/oder gewindeartig. Vorzugsweise ist das Sensorelement, insbesondere die lichtleitende Faser, helixartig um den Grundkörper gewickelt. Insbesondere je kleiner der Winkel des Sensorelements zur Umfangsrichtung des Grundkörpers ausgebildet ist, desto geringer ist die axiale Länge und/oder der axiale Abstand einer Faserumschlingung der lichtleitenden Faser entlang des Hohlprofils, welcher als Schlaglänge bezeichnet wird. Insbesondere kann die lichtleitende Faser mit einem Links- oder mit einem Rechtsschlag um den Grundkörper gewickelt sein, insbesondere von einem Messende der lichtleitenden Faser aus gesehen. Vorzugsweise ist das Sensorelement dazu vorgesehen, einen, insbesondere ortsaufgelösten, Fluiddruck, insbesondere Flüssigkeitsdruck und/oder Wasserdruck und/oder Porendruck, in einer Umgebung, insbesondere in einem Boden, zu ermitteln. Zu einer Messung des Fluiddrucks in einem Boden wird die Sensorvorrichtung zumindest abschnittsweise in dem Boden vergraben und/oder in den Untergrund eingebracht. Vorzugsweise wird das Sensorelement bei einer Fluiddruckbeaufschlagung gedehnt und/oder gestaucht. Insbesondere ändern sich durch die, insbesondere lokale, Dehnung / Stauchung ortsabhängig die optischen Transmissions- und/oder Reflexionseigenschaften, für in dem Sensorelement geführtes Licht. Das Sensorelement erzeugt insbesondere aus den ortsabhängigen optischen Eigenschaften der Vorstreuung und/oder Rückstreuung, beziehungsweise der optischen Transmissions- und/oder Reflexion, ein Messsignal aus dem sich ein lokaler Druck, insbesondere der lokale Fluiddruck in dem Boden, ableiten lässt. Vorzugsweise erstreckt sich das Sensorelement, insbesondere, die lichtleitende Faser zumindest im Wesentlichen über die gesamte Länge der Sensorvorrichtung. Die Sensorvorrichtung kann Längen von mehreren Metern, z.B. etwa 10 m, etwa 50 m, etwa 100 m oder etwa 250 m oder sogar bis zu mehreren Kilometern, z.B. bis zu 30 km oder bis zu 50 km aufweisen. Kürzere Sensorvorrichtungen sind jedoch selbstverständlich auch denkbar. Vorzugsweise weist die Sensoreinheit ein Mantelelement auf, welches das Sensorelement umhüllt. Vorzugsweise ist das Mantelelement aus einem elastischen Kunststoff, insbesondere einem thermoplastischen Elastomer oder einem vergleichbaren Werkstoff mit ausgeprägter Elastizität, ausgebildet. Insbesondere ist das Mantelelement flexibel ausgebildet. Insbesondere ist das Mantelelement haftend mit dem Grundkörper, insbesondere dem Rohr, ausgebildet. Vorzugsweise ist das Mantelelement dazu vorgesehen, das Sensorelement, insbesondere vor einer Schmutzbeaufschlagung, korrosiven Medien und/oder einer Beschädigung, zu schützen und/oder eine wenigstens im Wesentlichen unverfälschte Kraft- und/oder Druckübertragung auf das Sensorelement zu realisieren. Insbesondere ist das Mantelelement fluiddicht, insbesondere wasserdicht und/oder für Wasser undurchlässig, ausgebildet.

Insbesondere bildet die Sensorvorrichtung den Messbereich aus. Insbesondere ist der Messbereich als ein Bereich des Sensorelements ausgebildet, in welchem ein Fluiddruck erfasst wird. Insbesondere erstreckt sich die Übertragungseinheit zumindest über den Messbereich. Vorzugsweise wird der Messbereich von der Längserstreckung der Übertragungseinheit und einem Umfang des Hohlprofils aufgespannt. Insbesondere kann eine Länge des Messbereichs etwa einer Länge der Sensorvorrichtung und/oder des Grundkörpers entsprechen. Es ist jedoch auch denkbar, dass der Messbereich deutlich kürzer ist als eine Gesamtlänge der Sensorvorrichtung und/oder des Grundkörpers. Insbesondere kann die Sensorvorrichtung mehrere getrennte, in Längsrichtung des Grundkörpers nebeneinander angeordnete Messbereiche, aufweisen. Insbesondere weisen die getrennten Messbereiche Längserstreckungen im Zentimeterbereich, z.B. etwa 10 cm, etwa 20 cm, etwa 30 cm, etwa 40 cm oder etwa 50 cm auf. Insbesondere könnten die in Längsrichtung des Sensorelements angeordneten Messbereiche der Sensorvorrichtung voneinander beabstandet, insbesondere nicht kontaktierend, ausgebildet sein. Insbesondere bildet die Sensorvorrichtung einen weiteren Messbereich aus, welcher vorzugsweise als ein Bereich des Sensorelements ausgebildet ist, in welchem ein Erddruck erfasst wird. Insbesondere sind die Messbereiche und die weiteren Messbereiche abwechselnd in Längsrichtung der Sensorvorrichtung und/oder des Grundkörpers hintereinander angeordnet. Insbesondere erstreckt sich das zumindest eine Sensorelement, insbesondere die zumindest eine lichtleitende Faser, bevorzugt über mehrere der Messbereiche und/oder der weiteren Messbereiche und besonders bevorzugt über alle Messbereiche und/oder alle weiteren Messbereiche. Vorzugsweise ist die Übertragungseinheit dazu vorgesehen, das Fluid, insbesondere das, z.B. in dem Erdboden / einem Bohrloch, etc. enthaltene Wasser und/oder Gas, aufzunehmen und an die Oberfläche der Sensoreinheit weiterzuleiten / zu übertragen. Insbesondere kann der Fluiddruck ein Gas- und/oder ein Flüssigkeitsdruck sein.

Des Weiteren wird vorgeschlagen, dass die Übertragungseinheit zumindest ein Aufnahmeelement umfasst, welches den Grundkörper und das zumindest eine Sensorelement in dem Messbereich entlang einer Mittelachse des Grundkörpers betrachtet zumindest größtenteils, insbesondere vollständig, umschließt. Vorteilhaft kann der Fluiddruck von allen Richtungen gleichmäßig übertragen werden. Vorteilhaft kann eine besonders hohe Zuverlässigkeit der Messung erreicht werden. Vorteilhaft kann eine gleichmäßige Beanspruchung der Sensoreinheit und des Grundkörpers erreicht werden. Vorteilhaft wird eine gute Homogenität der Fluiddrucksensorempfindlichkeit an verschiedenen, in Längsrichtung verteilten Positionen erreicht. Besonders vorteilhaft kann eine besonders hohe Messgenauigkeit erreicht werden. Insbesondere umschließt die Übertragungseinheit und/oder das Aufnahmeelement den Grundkörper zumindest größtenteils in Umfangsrichtung des Grundkörpers. Unter der Wendung "größtenteils umschließen" soll in diesem Zusammenhang insbesondere eine Umschließung von zumindest 60 %, bevorzugt zumindest 75 % und besonders bevorzugt von zumindest 90 % eines Gesamtumfangs des Grundkörpers verstanden werden. Insbesondere bildet das Aufnahmeelement eine Hülle um die Sensoreinheit. Insbesondere entspricht eine Form des Aufnahmeelements einer Form des Grundkörpers, insbesondere einer Form eines Hohlprofils, wie beispielsweise der eines Rohrs. Insbesondere weist ein Außendurchmesser der Sensoreinheit im Wesentlichen den Innendurchmesser des Aufnahmeelements auf. Insbesondere sind Grundkörper, Sensoreinheit und Übertragungseinheit ineinander geschachtelt, insbesondere als ineinander geschachtelte Hohlprofile, ausgebildet.

Ferner wird vorgeschlagen, dass die Übertragungseinheit an der Sensoreinheit, insbesondere an dem Mantelelement der Sensoreinheit, anliegt. Vorteilhaft kann ein Fluiddruck durch die Übertragungseinheit zumindest im Wesentlichen vollständig übertragen werden und dadurch eine Messgenauigkeit verbessert werden. Insbesondere kontaktiert die Übertragungseinheit die Sensoreinheit zumindest im Wesentlichen über eine gesamte Mantelfläche der Sensoreinheit, welche insbesondere durch einen Umfang der Sensoreinheit und eine axiale Länge parallel zu der Mittelachse des Grundkörpers, insbesondere des Messbereichs, aufgespannt wird. Insbesondere definiert ein Kontaktbereich zwischen Übertragungseinheit und Sensoreinheit und/oder ein Überlappungsbereich zwischen Übertragungseinheit und Sensoreinheit den Messbereich. Es ist auch denkbar, dass die Übertragungseinheit kontaktlos, insbesondere mit einer Spielpassung zwischen Übertragungseinheit und Sensoreinheit, insbesondere des Mantelelements der Sensoreinheit, um das Sensorelement herum angeordnet ist. Insbesondere könnte ein Innendurchmesser der Übertragungseinheit größer sein als ein Außendurchmesser der Sensoreinheit. Insbesondere ist eine kontaktlos angeordnete Übertragungseinheit lose um die Sensoreinheit, insbesondere das Mantelelement der Sensoreinheit, angeordnet. Unter der Wendung "lose" soll dabei verstanden werden, dass aufgrund des in Bezug zu dem Außendurchmesser der Sensoreinheit größeren Innendurchmessers der Übertragungseinheit eine Relativbewegung zwischen Übertragungseinheit und Sensoreinheit möglich ist.

Des Weiteren wird vorgeschlagen, dass der Grundkörper und das zumindest eine Sensorelement kraft- und/oder formschlüssig miteinander verbunden sind und gemeinsam zumindest im Wesentlichen formelastisch ausgebildet sind. Ein Fluiddruck wird auf das Sensorelement übertragen. Besonders vorteilhaft kann das Sensorelement durch den Grundkörper besonders gut geführt und/oder positioniert werden. Insbesondere wird der Kraftschluss durch eine durchmesseraufweitende Kraft, welche von dem Grundkörper auf das Sensorelement ausgeübt wird, erzeugt und/oder bereitgestellt. Unter "kraft- und/oder formschlüssig verbunden" soll dabei insbesondere eine lösbare Verbindung verstanden werden, wobei eine Haltekraft zwischen zwei Bauteilen vorzugsweise durch einen geometrischen Eingriff der Bauteile ineinander und/oder eine Reibkraft zwischen den Bauteilen, frei von einer stoffschlüssigen Verbindung, insbesondere einer Klebeverbindung, übertragen wird. Vorzugsweise weist das Sensorelement eine ausgeprägte Steifigkeit, insbesondere zumindest im Wesentlichen die gleiche Steifigkeit, wie der Grundkörper, auf. Die zumindest im Wesentlichen gleiche Steifigkeit von Grundkörper und Sensorelement ist dazu vorgesehen, dass der Kraft- und/oder Formschluss des Sensorelements auf dem Grundkörper bei einer Druckbeaufschlagung / bei einer Formänderung von Grundkörper und/oder Sensorelement aufrechterhalten und/oder im Wesentlichen unbeeinflusst bleibt.

Unter einer "im Wesentlichen gleichen Steifigkeit" soll in diesem Zusammenhang insbesondere eine maximale Abweichung der Steifigkeiten von weniger als 15 %, vorteilhaft weniger als 10 %, bevorzugt weniger als 5 % und besonders bevorzugt von weniger als 3 % verstanden werden.

Die Übertragungseinheit umfasst zumindest ein Aufnahmeelement, das aus einem porösen Material ausgebildet ist. Vorteilhaft kann eine verbesserte Fluidaufnahme erfolgen. Vorteilhaft kann eine verbesserte Übertragung des Fluiddrucks auf die Sensoreinheit erfolgen. Vorteilhaft wird eine Messgenauigkeit verbessert. Insbesondere weist das poröse Material Poren und/oder Kapillaren und/oder Kammern und oder Flüssigkeitsreservoirs und/oder ähnliche Hohlräume auf, welche dazu vorgesehen sind, das Fluid aufzunehmen und/oder zu halten. Vorzugsweise ist das poröse Material als ein saugfähiger Schwamm und/oder ein Vlies und/oder ein Schaum, insbesondere ein Polymerschaum, gebildet. Vorzugsweise liegt eine Porosität bzw. eine Durchlässigkeit, insbesondere für den Porenwasserdruck, des Aufnahmeelements in einem Bereich, welcher größer als 10⁻⁴ m/s ausgebildet ist. Es ist auch denkbar, dass das Aufnahmeelement aus einem Hohlraum besteht, welcher durch eine fluiddurchlässige und/oder teildurchlässige Membran gebildet ist. Insbesondere ist das Porenmaterial als ein standfestes Material ausgebildet. Erfindungsgemäß umfasst die Übertragungseinheit zumindest das Aufnahmeelement und eine Stützeinheit, wobei die Stützeinheit dazu vorgesehen ist, das zumindest eine Aufnahmeelement zumindest bereichsweise gegen eine durch eine mechanische Krafteinwirkung von außen bewirkte Deformation abzuschirmen. Vorteilhaft wird eine Beschädigung der Sensoreinheit verhindert. Vorteilhaft kann ein Fluiddruck gemessen werden. Vorteilhaft kann eine Messgenauigkeit, insbesondere bei Bodenmessungen, verbessert werden. Vorteilhaft kann eine Messung des Fluiddrucks getrennt von einem ebenfalls im Boden herrschenden Bodendruck und/oder Erddruck ermöglicht werden, insbesondere da die Stützeinheit wasserdurchlässig, jedoch undurchlässig für Boden, insbesondere Erde und/oder Gestein, ausgebildet ist. Vorteilhaft kann eine Lebensdauer der Sensorvorrichtung verbessert werden. Insbesondere stützt und/oder schirmt die Stützeinheit einen von einem Fluid verschiedenen Stoff, insbesondere einen Feststoff, insbesondere Erde und/oder Gestein und/oder weitere in dem Boden angereicherte Feststoffe, ab. Insbesondere durch die fluiddurchlässigen und feststoffundurchlässigen Eigenschaften der Stützeinheit kommt nur ein Fluid in Kontakt mit dem Aufnahmeelement und/oder mit der Sensoreinheit. Insbesondere ist die Stützeinheit dazu vorgesehen, den Fluiddruck von einem mechanischen Druck, insbesondere durch die Gravitation erzeugten Druck, insbesondere Gewichtsdruck von Feststoffen von dem Fluiddruck zu separieren. Die Stützeinheit weist insbesondere Ausnehmungen, Bohrungen oder dergleichen, auf, welche ausschließlich fluiddurchlässig ausgebildet sind. Insbesondere ist die Stützeinheit bodendruckfest ausgebildet. Es ist denkbar, dass auch das Aufnahmeelement bereits eine Bodendruckfestigkeit zumindest für geringere Tiefen aufweist. Insbesondere ist ein bodendruckfestes Objekt zumindest im Wesentlichen unkomprimierbar und/oder unverformbar durch Bodendrücke, wie sie in typischen Bohrtiefen, z.B. bis zu 20 m, bis zu 50 m, bis zu 500 m oder bis zu 5000 m, oder typischen Bauwerkstiefen vorkommen.

Außerdem wird vorgeschlagen, dass die Stützeinheit das zumindest eine Aufnahmeelement über zumindest einen Großteil des Messbereichs entlang einer Mittelachse des Grundkörpers betrachtet zumindest größtenteils, insbesondere vollständig, umschließt. Vorteilhaft ist der gesamte Messbereich, insbesondere die gesamte Sensoreinheit geschützt. Vorteilhaft kann eine verbesserte Messgenauigkeit über den gesamten Messbereich bereitgestellt werden. Insbesondere kontaktiert die Stützeinheit eine Oberfläche des Aufnahmeelements entlang der Mittelachse des Grundkörpers zumindest im Wesentlichen vollständig. Insbesondere ist die Stützeinheit dazu vorgesehen, das Fluid zumindest im Wesentlichen über den gesamten Messbereich dem Aufnahmeelement bereitzustellen, wobei der mechanische Druck, insbesondere Bodendruck, zumindest im Wesentlichen über den gesamten Messbereich abgeschirmt wird. Unter "einen Großteil des Messbereichs" soll in diesem Zusammenhang insbesondere zumindest 60 %, bevorzugt zumindest 75 % und besonders bevorzugt zumindest 90 % des Messbereichs verstanden werden. Unter der Wendung "größtenteils umschließen" soll in diesem Zusammenhang insbesondere eine Umschließung von zumindest 60 %, bevorzugt zumindest 75 % und besonders bevorzugt von zumindest 90 % eines Gesamtumfangs des Aufnahmeelements verstanden werden Es ist denkbar, dass das Aufnahmeelement von der Stützeinheit leicht vorgespannt und/oder komprimiert wird. Es ist auch denkbar, dass die Stützeinheit am Messbereich angeordnet ist, jedoch das Aufnahmeelement nicht am gesamten Umfang kontaktiert, insbesondere teilweise kontaktlos und/oder berührungsfrei zu dem Aufnahmeelement, ausgeführt ist. In diesem Fall könnte das Aufnahmeelement lose in die Stützeinheit eingelegt sein.

Erfindungsgemäß ist die Stützeinheit dazu vorgesehen, das Fluid von außen durch die Stützeinheit hindurch an das Aufnahmeelement zu leiten, wobei die Stützeinheit Ausnehmungen aufweist, welche ausschließlich fluiddurchlässig ausgebildet sind. Vorteilhaft kann der Fluiddruck von einem Festkörperdruck separiert werden. Insbesondere ist die Stützeinheit mit, insbesondere zumindest im Wesentlichen und/oder überwiegend radial angeordneten, Ausnehmungen versehen, welche nur für Fluide durchlässig sind. Es ist denkbar, dass die Ausnehmungen unterschiedlich groß ausgebildet sind. Insbesondere sind die Ausnehmungen als Bohrungen ausgebildet. Es ist auch denkbar, dass die Ausnehmungen in der Stützeinheit als eine Art Membran ausgebildet sind, welche für Fluide teildurchlässig ausgebildet ist, und dazu vorgesehen sind, einen Teilfluiddruck zu messen. Vorzugsweise ist die Stützeinheit dazu vorgesehen, das Fluid, insbesondere die Flüssigkeit und/oder das Wasser der Aufnahmeeinheit gleichmäßig zu verteilen, insbesondere in gleichmäßigen und/oder regelmäßig verteilten Abständen, bereitzustellen, wobei die Stützeinheit dadurch die Messung unterschiedlicher Fluiddrücke über die Messlänge ermöglicht. Insbesondere ist die Stützeinheit frei von Graten ausgebildet, sodass das Aufnahmeelement infolge Relativbewegungen und/oder Vibrationen und/oder wechselndem Fluiddruck nicht beschädigt wird. Die Stützeinheit ist form- und/oder kraftschlüssig an dem Aufnahmeelement befestigt, insbesondere über das Aufnahmeelement geschoben, und/oder gestülpt, beispielsweise mit einer Presspassung, einer Übergangspassung oder einer Spielpassung. Beispielsweise könnten die Stützeinheit und das Aufnahmeelement lose aneinander montiert werden.

Weiterhin wird vorgeschlagen, dass die Stützeinheit zumindest ein Stützelement umfasst, das aus einem festen Material ausgebildet ist. Vorteilhaft können größere Kräfte abgeschirmt werden. Insbesondere ist das feste, insbesondere standfeste, Material ein metallischer Werkstoff, insbesondere Stahl, und/oder ein Kunststoff, insbesondere Polymer, und/oder ein Kompositwerkstoff, insbesondere ein Verbundwerkstoff aus zumindest einem Kunststoff und einem Versteifungsmaterial, wie Glas und/oder Kohlefaser, welcher insbesondere zumindest bodendruckfest ausgebildet ist. Insbesondere ist der eingesetzte Werkstoff korrosionsbeständig ausgebildet. Vorzugsweise ist die Stützeinheit steif, insbesondere biegesteif, ausgebildet. Es ist denkbar, dass an dem Stützelement, insbesondere parallel zu der Mittelachse des Grundkörpers und/oder in Umfangsrichtung ausgerichtete Versteifungselemente angeordnet sind. Es ist denkbar, dass die Stützeinheit eine Mehrzahl an Stützelementen aufweist, welche in Längsrichtung nebeneinander und/oder zumindest teilweise ineinander geschachtelt angeordnet sind. Insbesondere ist jedem Messbereich der Sensorvorrichtung ein separates Stützelement zugeordnet. Alternativ ist denkbar, dass die gesamte Stützeinheit durch ein einzelnes Stützelement ausgebildet ist. Insbesondere bildet das Stützelement eine Art Manschette aus, welche die Übertragungseinheit insbesondere in Umfangsrichtung umgreift.

Ferner wird vorgeschlagen, dass die Übertragungseinheit einen geschützten Hohlraum um die Sensoreinheit ausbildet, in welchen Wasser frei von Umgebungsmaterial, wie insbesondere Erde, eindringen kann. Der Hohlraum dient insbesondere dazu einen separierten Bereich bereitzustellen, in welchem ein Fluiddruck unabhängig von weiteren Druckeinflüssen, wie insbesondere einem Erddruck herrscht. Vorzugsweise herrscht in dem Hohlraum derselbe Fluiddruck wie in einer Umgebung der Übertragungseinheit. Bevorzugt erstreckt sich der Hohlraum insbesondere koaxial um die Sensoreinheit. Es ist insbesondere denkbar, dass der Hohlraum bei einem Einbau der Sensorvorrichtung bereits mit einem Fluid, insbesondere Wasser gefüllt ist. Dadurch können insbesondere gezielt Fremdeinflüsse bei einer Messung des Fluiddrucks vermieden werden.

Es wird ferner vorgeschlagen, dass die Übertragungseinheit zumindest ein Aufnahmeelement aufweist, welches von einem Filter gebildet ist, wobei über das zumindest eine Aufnahmeelement Fluid, insbesondere Wasser, von einem Umgebungsmaterial getrennt in den Hohlraum eindringen kann. Das Aufnahmeelement kann sich dabei sowohl großflächig über eine Außenfläche der Übertragungseinheit erstrecken, als auch lediglich begrenzt im Bereich eines Durchgangskanals angeordnet sein. Vorzugsweise weist die Übertragungseinheit zumindest einen Durchgangskanal auf, welcher eine Umgebung der Übertragungseinheit mit dem Hohlraum verbindet, in welchem das zumindest eine Aufnahmeelement angeordnet ist. Vorzugsweise muss ein Fluid, welches den Durchgangskanal passiert, auch das Aufnahmeelement passieren. Das Aufnahmeelement ist insbesondere wasserdurchlässig. Dadurch kann insbesondere ein separates Eindringen von Wasser in den Hohlraum ermöglicht werden. Es kann insbesondere ein Eindringen von Umgebungsmaterial vermieden werden.

Des Weiteren wird vorgeschlagen, dass die Sensoreinheit einen ortsverteilten Dehnungs-Messsensor ausbildet. Insbesondere kann die Sensoreinheit dazu vorgesehen sein, jeweils einen auf verschiedene Abschnitte des Sensorelements wirkenden Druck zu ermitteln. Dazu wird beispielsweise eine Deformation des zumindest einen Sensorelements an einem ersten Abschnitt, an dem die Übertragungseinheit angeordnet ist, und an einem entlang des Grundkörpers angeordneten weiteren Abschnitt, der beabstandet von der Übertragungseinheit angeordnet ist, in Beziehung gesetzt. Vorteilhaft können durch den ortsverteilten Dehnungs-Messsensor verschiedene Drücke und/oder ein Druckverlauf in Längserstreckung der Sensorvorrichtung gemessen werden. Insbesondere kann mit dem ortsverteilten Dehnungs-Messsensor eine ortsverteilte, insbesondere kontinuierliche, vorzugsweise reaktionsschnelle, Messung mit einer örtlichen Auflösung von 0.001 Meter bis 10 Meter durchgeführt werden, welche eine, vorzugsweise reaktionsschnelle, Messung unterschiedlicher Fluiddrücke und/oder einen Fluiddruckverlauf entlang der optischen Faser ermöglicht. Unter der Wendung "ortsverteilt" soll vorzugsweise verstanden werden, dass an verschiedenen Orten und/oder Positionen ein voneinander verschiedener Fluiddruck und/oder ein Druckverlauf gemessen und/oder ermittelt werden kann. Insbesondere wird für die Fluiddruckmessung ein DFOS (Distributed Fiber Optic Sensor), insbesondere ein DSS (Distributed Strain Sensor), eingesetzt. Insbesondere bildet die Sensoreinheit den DFOS und/oder den DSS aus. Insbesondere ist der ortsverteilte Dehnungs-Messsensor (DSS) dazu vorgesehen, an verschiedenen lokalen Positionen durch Druck, insbesondere Fluiddruck, induzierte optische Streuungs-, Reflektions- und/oder Transmissionsänderungen in dem faseroptischen Sensorelement bereitzustellen, welche gemessen und/oder ermittelt werden können. Insbesondere erstreckt sich ein Messbereich des Fluiddrucks von 0,1 kPa bis 50 MPa, insbesondere mit einer Auflösung und/oder Genauigkeit von 0,1 kPa. Insbesondere werden zu einer Kalibrierung an zwei voneinander verschiedenen Positionen Messungen durchgeführt, wobei nur an der einen Position nacheinander unterschiedliche Drücke, insbesondere Fluiddrücke, aufgebracht werden. Insbesondere kann die Differenz in dem Messsignal zwischen der unbelasteten, insbesondere mit Umgebungsdruck beaufschlagten, und der druckbelasteten, insbesondere nacheinander mit verschiedenen Fluiddrücken beaufschlagten, Position ermittelt werden, wobei die Differenz in dem Messsignal dem Differenzdruck zwischen unbelasteter Position und druckbeaufschlagter Position zugeordnet wird. Insbesondere kann über den Zusammenhang zwischen Messsignal und Differenzdruck im Normalbetrieb der Sensoreinheit auf den anliegenden Druck, insbesondere Fluiddruck, zurückgeschlossen werden.

Ferner wird vorgeschlagen, dass die Sensorvorrichtung ein als lichtleitende Faser ausgebildetes Kompensationselement aufweist, welches in oder an dem Grundkörper angeordnet ist und sich vorzugsweise zumindest im Wesentlichen parallel zu einer Längserstreckung des Grundkörpers erstreckt oder helixartig verläuft. Vorteilhaft kann eine Messgenauigkeit verbessert werden. Insbesondere ist das Kompensationselement dazu vorgesehen, Temperaturschwankungen zu einer Kalibriertemperatur und/oder Temperaturschwankungen über die Länge des Messbereichs zu kompensieren. Insbesondere wird ein durch eine temperaturbedingte Längenänderung des Kompensationselements bewirktes Messsignal rechnerisch mit dem Messsignal des Sensorelements berichtigt, wobei ein Temperatureinfluss auf die Messung eliminiert wird. Insbesondere liegt der Messbereich des Kompensationselements, insbesondere zur Temperaturkompensation der Messung, in einem Bereich von -50 °C bis +300 °C mit einer Genauigkeit und/oder Auflösung von 0,1 °C. Die Messlänge des Kompensationselements, insbesondere zur Temperaturkompensation, entspricht der Messlänge des Sensorelements. Insbesondere stimmt die Gesamtlänge des Kompensationselements zumindest im Wesentlichen mit der Gesamtlänge der Sensorvorrichtung überein. Insbesondere kann eine Länge des Kompensationselements bis zu etwa 30 km oder bis zu etwa 50 km betragen. Insbesondere beträgt eine örtliche Auflösung eines durch das Kompensationselement erzeugten Kompensationssignals wenigstens 10 m, vorzugsweise wenigstens 0,5 m, bevorzugt wenigstens 0,1 m und besonders bevorzugt wenigstens 0,001 m. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist.

Insbesondere ist das Kompensationselement als ein auf dem Prinzip des Distributed Temperature Sensing (DTS) basierender DTS-Temperatursensor ausgebildet. Insbesondere nutzt das DTS-Temperaturmessprinzip eine Raman-, Brillouin oder Rayleigh-Streuung in einer lichtleitenden Faser zur Temperaturmessung. Insbesondere wird dazu ein optisches Lasersignal, welches durch die lichtleitende Faser gesendet wird, von dem Material der lichtleitenden Faser durch optische Streuung zum sendenden Ende der lichtleitenden Faser zurückgestreut, wo dann das gestreute Signal analysiert wird und dann ein Maß für eine Temperaturverteilung entlang der Faser ermittelt werden kann. Insbesondere wird die durch den DTS-Temperatursensor ermittelte temperaturinduzierte Dehnung mit der durch die Sensoreinheit gemessenen fluiddruckinduzierten Dehnung/Stauchung zu einer Temperaturkompensation verrechnet. Vorzugsweise ist das Kompensationskabel zumindest im Wesentlichen mittig im Innenraum des Grundkörpers, insbesondere des Rohrs, angeordnet. Es ist auch denkbar, dass das Kompensationskabel außermittig im Innenraum des Grundkörpers, insbesondere des Rohrs, angeordnet ist. Es ist auch denkbar, dass das Kompensationselement an einer Innenwand des Grundkörpers, insbesondere des Rohrs, angeordnet ist. Vorzugsweise ist das Kompensationselement fest, insbesondere stoffschlüssig, mit dem Grundkörper verbunden. Es ist jedoch auch denkbar, dass das Kompensationselement lose, insbesondere unbefestigt und/oder beweglich, in einem Innenraum des Grundkörpers angeordnet ist. Es ist denkbar, dass weitere Messgrößen, insbesondere Druck, durch das Kompensationselement berichtigt werden.

Außerdem wird vorgeschlagen, dass die Übertragungseinheit eine Mehrzahl von Aufnahmeelementen umfasst, die entlang einer Längserstreckung des Grundkörpers verteilt angeordnet sind. Vorteilhaft können längere Strecken, an denen keine Messung durchgeführt werden soll, überbrückt werden und somit Kosten eingespart werden. Vorteilhaft können unterschiedliche Drücke, insbesondere Fluiddrücke, gemessen werden. Vorteilhaft werden an den unterschiedlichen Aufnahmeelementen zeitgleich Fluiddruckmessungen mit unterschiedlichem Druck durchgeführt, welche sich nicht gegenseitig beeinflussen. Vorzugsweise weist jedes der an der Sensoreinheit angeordneten Aufnahmeelemente eine gleiche Länge zwischen 20 mm und 500 mm auf. Es ist auch denkbar, dass die Aufnahmeelemente voneinander verschiedene Längen zwischen 20 mm und 500 mm aufweisen. Vorzugsweise sind die Aufnahmeelemente kontaktfrei zueinander angeordnet. Vorzugsweise ist ein Abstand zwischen zwei Aufnahmeelementen vorgesehen. Vorzugsweise sind die Abstände zwischen den Aufnahmeelementen gleich groß. Es ist denkbar, dass die Abstände zwischen den Aufnahmeelementen voneinander verschieden ausgebildet sind. Es ist denkbar, dass die Abstände zwischen den Aufnahmeelementen regelmäßig und/oder unregelmäßig ausgebildet sind. Es ist denkbar, dass die Längen der Aufnahmeelemente regelmäßig und/oder unregelmäßig ausgebildet sind. Es ist denkbar, dass die Position der Aufnahmeeinheiten variabel, insbesondere veränderlich und/oder einstellbar, ausgebildet ist. Es ist denkbar, dass die Abstände zwischen den Aufnahmeelementen, insbesondere den Bereichen ohne Stützeinheit und/oder ohne Aufnahmeelement, dazu vorgesehen sind, den Bodendruck, insbesondere Erddruck, und/oder Festkörperdruck, in der Erde zu messen. Insbesondere wird an den Abständen zwischen den Aufnahmeelementen der Gesamtdruck in dem Boden gemessen und mit einem Messergebnis der Fluiddruckmessung an den Aufnahmeelementen verrechnet.

Ferner wird vorgeschlagen, dass die Sensoreinheit wenigstens ein als lichtleitende Faser ausgebildetes weiteres Sensorelement umfasst, welches sich zumindest in dem Messbereich entlang der Längserstreckung des Grundkörpers zumindest im Wesentlichen helixartig um den Grundkörper erstreckt und welches vorzugsweise zumindest einen von dem Sensorelement verschiedenen Faserparameter aufweist. Vorteilhaft kann eine Messgenauigkeit und/oder eine Messauflösung verbessert werden. Vorteilhaft kann eine Zuverlässigkeit, insbesondere durch ein zweites, redundantes Sensorelement, verbessert werden. Vorzugsweise wird zumindest ein weiteres Sensorelement, insbesondere helixförmig, jedoch phasenverschoben zu dem ersten Sensorelement, am Umfang des Grundkörpers mit gleicher Schlaglänge und mit gleicher Wicklungsrichtung angeordnet. Es ist denkbar, dass zumindest ein Faserparameter, insbesondere eine Schlaglänge und/oder ein Faserdurchmesser und/oder eine Wicklungsrichtung, zu dem Faserparameter des ersten Sensorelements verändert ist. Unter einem "Faserparameter" soll insbesondere ein Faserdurchmesser und/oder eine Faserlänge und/oder ein Wicklungsdurchmesser und/oder eine Wicklungsrichtung und/oder eine Schlaglänge und/oder ein Fasermaterial ( z.B. Glas, Plastic Optical Fiber, Photonic Crystal Fiber) und/oder ein Brechungsindex und/oder ein Profil und/oder ein Fasertyp (Singlemode, Multimode, Step-Index, Graded-Index, Polarization Maintaining Fiber, High Birefringent Fiber) und/oder eine numerische Apertur und/oder ein Kerndurchmesser der Faser und/oder ein Cladding-Durchmesser und/oder ein Beschichtungsmaterial der Faser und/oder eine Dimension (Micro- und Macro-Bening Optimisierung) und/oder eine weitere Eigenschaft oder Ausführungsform der gewickelten lichtleitenden Faser verstanden werden. Es ist denkbar, dass die Sensoreinheit zusätzlich zu der ersten und der zweiten lichtleitenden Faser, weitere lichtleitende Fasern, insbesondere mit von der ersten und/oder der zweiten lichtleitenden Faser verschiedenen Faserparametern umfasst. Beispielsweise könnten zwei lichtleitende Fasern als Gleichschlag und/oder als Kreuzschlag angeordnet sein. Es ist auch denkbar, dass sich Faserparameter einer lichtleitenden Faser in Längsrichtung der Sensorvorrichtung verändern. Es ist denkbar, dass die Anordnung der lichtleitenden Faser nur abschnittsweise helixartig angeordnet ist. Zudem ist denkbar, dass mehrere lichtleitende Fasern zu einem Faserbündel verflochten sind.

Des Weiteren wird ein Sensorsystem zu einer Messung eines Fluiddrucks, mit zumindest einer Sensorvorrichtung nach einem der vorhergehenden Ansprüche und mit einer Auswerteeinheit zu einer Ermittlung des Fluiddrucks in Abhängigkeit von einer Deformation eines Sensorelements der Sensorvorrichtung, wobei die Auswerteeinheit dazu vorgesehen ist, den Fluiddruck mittels des Sensorelements über eine verteilte Glasfaserabtastung zu ermitteln, vorgeschlagen. Vorteilhaft kann der Fluiddruck dadurch in der Umgebung, insbesondere in einem Boden, unabhängig von einem mechanischen Druck eines von einem Fluid verschiedenen Stoffs, insbesondere eines Festkörpers, beispielsweise eines Gesteins oder einer Erde des Bodens, ermittelt werden. Besonders vorteilhaft kann eine besonders hohe Messgenauigkeit erreicht werden. Vorzugsweise weist die Auswerteeinheit zumindest einen Rechner, mit zumindest einem Prozessor und mit zumindest einem Speicher auf. Insbesondere umfasst die Auswerteeinheit eine Schnittstelle, welche dazu vorgesehen ist, das Messsignal von der Sensorvorrichtung zu empfangen. Insbesondere weist die Auswerteeinheit eine Lichtquelle auf, welche dazu vorgesehen ist, ein gepulstes oder kontinuierliches Licht, insbesondere mit konstanter Wellenlänge oder mit verschiedenen Wellenlängen, für die Messung mit der Sensoreinheit bereitzustellen. Insbesondere weist die Auswerteeinheit einen Photodetektor auf, welcher dazu vorgesehen ist, das in der Sensoreinheit gestreute oder übertragene oder reflektierte Licht zu detektieren. Insbesondere wird das von dem Detektor detektierte Licht mittels der Auswerteeinheit analysiert und/oder ausgewertet. Die Auswerteeinheit weist insbesondere eine Ausgabeeinheit auf. Insbesondere ist die Ausgabeeinheit dazu vorgesehen, die Auswertungen der Auswerteeinheit einem Benutzer auszugeben. Unter einer "verteilten Glasfaserabtastung" soll insbesondere eine Druckmessung mittels eines DFOS (Distributed Fiber Optic Sensors) verstanden werden. Insbesondere können bei der verteilten Glasfaserabtastung in Längsrichtung des Sensorelements mehrere Druckmessungen, insbesondere unabhängig voneinander, durchgeführt werden.

Ferner wird eine Verwendung der Sensorvorrichtung und/oder des Sensorsystems zu einer Messung von Fluiddruckveränderungen und/oder Erddruckveränderung, insbesondere in einem Boden, vorgeschlagen. Vorteilhaft kann die Sensorvorrichtung zur Fluiddrucküberwachung auf Baustellen, insbesondere des Fluiddrucks durch einen Anstieg des Grundwasserpegels bspw. durch den Pegelanstieg von Flüssen, eingesetzt werden. Insbesondere wird die Sensorvorrichtung zu einer Messung der Wasserdruckveränderung im Boden infolge Erosion, insbesondere Erddruck, eingesetzt. Insbesondere wird die Sensorvorrichtung zu einer Fluiddruckmessung in Erdbohrungen, welche insbesondere durch Porenwasser, Stützflüssigkeit und/oder Gasdruck erzeugt wird, eingesetzt. Insbesondere wird die Sensorvorrichtung zu einer Messung der Bodendruckveränderung im Boden infolge Filtration, insbesondere Porenwasserdruck, und/oder infolge Verlandung von Sedimenten und Auflasten, insbesondere Erddruck, eingesetzt. Insbesondere wird die Sensorvorrichtung zu einer Messung von Grundwasserhöhen, insbesondere Porenwasserdruck, eingesetzt. Vorzugsweise kann der Fluiddruck in fluiddurchdrängten, insbesondere wasserdurchdrängten Erd- und Gesteinsschichten frei von dem Erd- und/oder Gesteinsdruck gemessen werden.

Des Weiteren wird ein Verfahren zu einer Herstellung einer Sensorvorrichtung vorgeschlagen, wobei vorzugsweise zumindest der Grundkörper in einem Extrusionsverfahren, insbesondere Koextrusionsverfahren hergestellt wird und wobei während der Extrusion des Grundkörpers das, insbesondere vorgefertigte, Kompensationselement miteingebracht wird. Vorteilhaft kann die Sensorvorrichtung kostengünstig gefertigt werden. Vorzugsweise wird der Grundkörper, insbesondere das Rohr und/oder die Schaumfüllung in einem Koextrusionsverfahren zeitgleich gefertigt, wobei in dem Verfahrensschritt das Kompensationselement mit einer Extrusionsgeschwindigkeit mitgeführt und dadurch in den Grundkörperkern eingebracht werden kann. Es ist denkbar, dass zwischen den Kontaktflächen, insbesondere zwischen Kompensationselement und Schaum, bzw. Schaum und Hohlprofil jeweils ein materialspezifischer Haftvermittler eingebracht wird. Insbesondere ist der Haftvermittler dazu vorgesehen, die Oberflächen miteinander zu verbinden. In einem Folgeschritt oder zeitgleich mit der Extrusion des Grundkörpers könnte das Sensorelement helixförmig auf den Grundkörper aufgebracht werden. In einem weiteren Folgeschritt oder zeitgleich mit der Extrusion des Grundkörpers könnte zudem das Mantelelement, die Übertragungseinheit und/oder die Stützeinheit aufgebracht werden. Es ist denkbar, dass die gesamte Sensorvorrichtung in einem einzelnen Koextrusionsverfahren oder in einer ununterbrochenen Produktionsstraße mit verketteten Koextrusionsverfahren hergestellt wird. Alternativ ist auch eine Herstellung über ein Pultrusionsverfahren oder über ein manuelles Umwickeln und Kleben denkbar.

### Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines Sensorsystems mit Sensorvorrichtungen,
- Fig. 2: eine schematische perspektivische Darstellung eines Teils eines Grundkörpers und einer Sensoreinheit einer der Sensorvorrichtungen,
- Fig. 3: eine schematische perspektivische Darstellung des Teils der Sensorvorrichtung mit einer Übertragungseinheit,
- Fig. 4a: eine schematische Schnittdarstellung der Sensorvorrichtung,
- Fig. 4b: eine schematische Schnittdarstellung einer alternativen Sensorvorrichtung,
- Fig. 5: eine schematische Darstellung der Sensorvorrichtung mit segmentweiser Anordnung von Übertragungseinheiten,
- Fig. 6: eine schematische perspektivische Darstellung der Sensorvorrichtung mit einer Sensoreinheit, welche ein zusätzliches Sensorelement aufweist,
- Fig. 7: ein schematisches Ablaufdiagramm eines Verfahrens zur Herstellung der Sensorvorrichtung,
- Fig. 8: eine schematische Darstellung eines Flusses, eines Flussdamms und eines alternativen Sensorsystems mit einer alternativen Sensorvorrichtung,
- Fig. 9: einen Teilausschnitt der Sensorvorrichtung mit einer Übertragungseinheit in einer schematischen Darstellung und
- Fig. 10: den Teilausschnitt der Sensorvorrichtung mit der Übertragungseinheit in einer schematischen Schnittdarstellung.

### Beschreibung der Ausführungsbeispiele

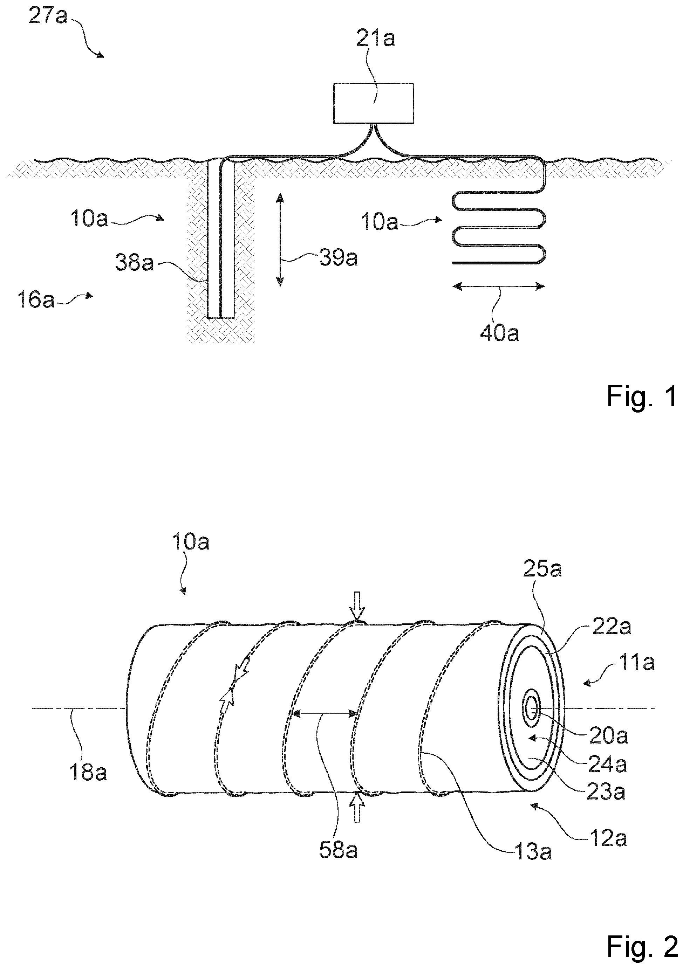

Die Figur 1 zeigt schematisch ein Sensorsystem 27a. Das Sensorsystem 27a weist eine Sensorvorrichtung 10a auf. Im in der Fig. 1 dargestellten Fall weist das Sensorsystem beispielhaft zwei Sensorvorrichtungen 10a auf. Die Sensorvorrichtung 10a bildet einen ortsaufgelösten Drucksensor aus. Die Sensorvorrichtung 10a ist dazu vorgesehen, einen Fluiddruck in einem Boden 16a zu messen. Die Sensorvorrichtung 10a ist zu einer Messung von Fluiddruckveränderungen im Boden vorgesehen. Die Sensorvorrichtung 10a ist zu einer Verwendung für eine Messung von Erddruckveränderungen vorgesehen. Die Sensorvorrichtung 10a kann vertikal in dem Boden 16a verlegt sein. Eine der in der Fig. 1 dargestellten Sensorvorrichtungen 10a ist beispielhaft in Vertikalrichtung 39a in ein Bohrloch 38a eingebracht/versenkt. Die Sensorvorrichtung 10a kann in Horizontalrichtung 40a in dem Boden 16a verlegt sein. Eine weitere in der Fig. 1 dargestellte Sensorvorrichtung 10a ist beispielhaft in Horizontalrichtung 40a unter einer Oberfläche des Bodens vergraben. Die Sensorvorrichtung 10a kann vertikal und horizontal in dem Boden 16a verlegt sein. Die Sensorvorrichtung 10a kann in Kurven oder Bögen verlegt sein, wie durch die Mäanderform in Fig. 1 beispielhaft gezeigt ist. Die Sensorvorrichtung 10a ist biegeschlaff ausgebildet. Das Sensorsystem 27a weist eine Auswerteeinheit 21a auf. Die Auswerteeinheit 21a ist dazu vorgesehen, das Messsignal von der Sensorvorrichtung 10a aufzunehmen und auszuwerten. Die Auswerteeinheit 21a ist dazu vorgesehen, den Fluiddruck in dem Boden 16a über eine verteilte Glasfaserabtastung zu ermitteln.

Die Figur 2 zeigt schematisch einen Teil der Sensorvorrichtung 10a. Die Sensorvorrichtung 10a ist dazu vorgesehen, den Fluiddruck zu messen. Die Sensorvorrichtung 10a weist einen Grundkörper 11a auf. Der Grundkörper 11a umfasst einen Hohlkörper 22a. Der Hohlkörper 22a ist rohrförmig ausgebildet. Der Hohlkörper 22a ist aus einem elastischen Werkstoff gebildet. Der Werkstoff für den Hohlkörper 22a weist eine niedrige Steifigkeit mit einem E-Modul von weniger als 10 Megapascal auf. Der Werkstoff für den Hohlkörper 22a weist in einem Temperaturbereich von -5 °C bis 30 °C elastische Werkstoffeigenschaften auf. Der Werkstoff für den Hohlkörper 22a weist eine niedrige Viskosität auf und neigt daher nicht zu einem Kriechen. Der Hohlkörper 22a ist deformierbar ausgebildet. Der Hohlkörper 22a ist formstabil ausgebildet. Der Hohlkörper 22a ist aus einem Kunststoff gebildet.

Der Hohlkörper 22a bildet einen Innenraum 24a aus. Der Grundkörper 11a umfasst ein Füllelement 23a. Das Füllelement 23a ist in dem Innenraum 24a des Hohlkörpers 22a angeordnet. Das Füllelement 23a ist aus einem Schaumstoff ausgebildet. Alternative Ausgestaltungen des Füllelements 23a, wie z.B. ein Gel, sind denkbar. In einer alternativen Ausführungsform kann der Grundkörper 11a in dem Innenraum 24a hohl (d.h. ohne das Füllelement 23a) ausgebildet sein.

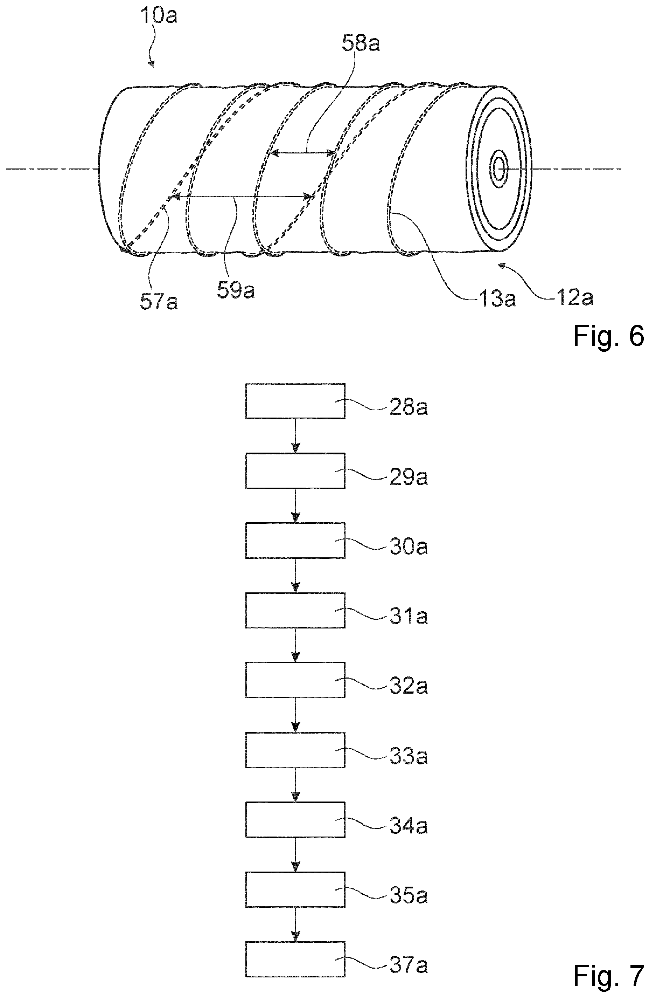

Die Sensorvorrichtung 10a weist eine Sensoreinheit 12a auf. Die Sensoreinheit 12a bildet einen ortsverteilten Dehnungs-Messsensor aus. Die Auswerteeinheit 21a ist zu einer Ermittlung des Fluiddrucks in Abhängigkeit von einer Deformation eines Sensorelements 13a der Sensorvorrichtung 10a vorgesehen. Die Sensoreinheit 12a ist als eine faseroptische Sensoreinheit 12a ausgebildet. Der Grundkörper 11a ist dazu vorgesehen, die Sensoreinheit 12a aufzunehmen. Die Sensoreinheit 12a ist an einem Außenumfang des Grundkörpers 11a angeordnet. Die Sensoreinheit 12a weist ein Sensorelement 13a auf. Das Sensorelement 13a ist als lichtleitende Faser ausgebildet. Die lichtleitende Faser ist am Außenumfang des Grundkörpers 11a helixartig angeordnet. Die lichtleitende Faser erstreckt sich entlang einer Längsrichtung des Grundkörpers 11a helixartig um den Grundkörper 11a. Es könnten mehrere helixartig angeordnete Sensorelemente 13a, 57a am Außenumfang des Grundkörpers 11a angeordnet sein (vgl. Fig. 6).

Das Sensorelement 13a ist dazu vorgesehen, ein Messsignal zu einer Messung des Fluiddrucks bereitzustellen. Das Sensorelement 13a erzeugt ein Messsignal, wenn ein Fluiddruck anliegt und das Sensorelement 13a durch den Fluiddruck gestaucht oder gedehnt wird (vgl. die in der Fig. 2 angedeuteten Pfeile). Das Sensorelement 13a ist kraftschlüssig mit dem Grundkörper 11a verbunden. Alternativ oder zusätzlich kann das Sensorelement 13a formschlüssig mit dem Grundkörper 11a verbunden sein. Das Sensorelement 13a ist elastisch verformbar ausgebildet. Der Grundkörper 11a und das Sensorelement 13a sind gemeinsam formelastisch ausgebildet. Das Sensorelement 13a weist die im Wesentlichen gleiche Steifigkeit, wie der Grundkörper 11a auf. Die im Wesentlichen gleiche Steifigkeit ist dazu vorgesehen, dass der Kraft- und/oder Formschluss zwischen Sensorelement 13a und Grundkörper 11a auch bei einer Dehnung oder Stauchung des Grundkörpers 11a und des Sensorelements 13a infolge einer Fluiddruckbeaufschlagung erhalten bleibt. Die Sensoreinheit 12a weist ein Mantelelement 25a auf. Das Mantelelement 25a ist aus einem thermoplastischen Elastomer gebildet. Das Mantelelement 25a ist elastisch verformbar ausgebildet. Das Mantelelement 25a und das Sensorelement 13a sind gemeinsam formelastisch ausgebildet. Das Mantelelement 25a ist an der Oberfläche griffig ausgebildet. Das Mantelelement 25a ummantelt den Grundkörper 11a. Das Mantelelement 25a ummantelt das Sensorelement 13a. Das Mantelelement 25a ist dazu vorgesehen, das Sensorelement 13a vor Schmutz und/oder Beschädigung und/oder Korrosion usw. zu schützen Das Mantelelement 25a ist dazu vorgesehen, den Fluiddruck an das Sensorelement 13a zu übertragen. Das Mantelelement 25a ist wasserundurchlässig ausgebildet.

Die Sensorvorrichtung 10a weist ein Kompensationselement 20a auf. Das Kompensationselement 20a ist als lichtleitende Faser ausgebildet. Das Kompensationselement 20a ist als DTS-Temperatursensor ausgebildet. In einer alternativen Ausführung könnte das Kompensationselement 20a als DSS-Dehnungssensor ausgebildet sein. Das Kompensationselement 20a weist eine Glasfaser 42a auf. Das Kompensationselement 20a weist einen Kunststoffmantel 43a auf. Das Kompensationselement 20a ist in dem Innenraum 24a des Hohlkörpers 22a angeordnet. Das Kompensationselement 20a ist entlang einer Mittelachse 18a in dem Innenraum 24a des Hohlkörpers 22a angeordnet, vgl. Fig. 2-4. In einer alternativen Ausführung könnte das Kompensationselement 20a auch außermittig, beispielsweise an einem Innenumfang oder an einem Außenumfang des Grundkörpers 11a angeordnet sein. Das Kompensationselement 20a ist dazu vorgesehen, ein Messsignal für eine temperaturbedingte Längenänderung bereitzustellen.

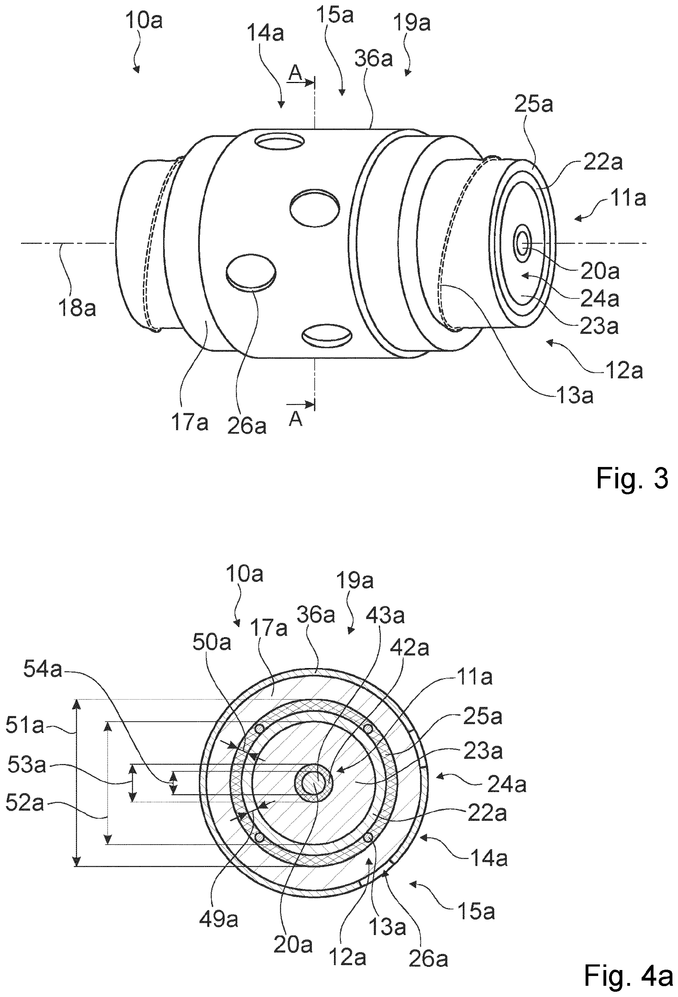

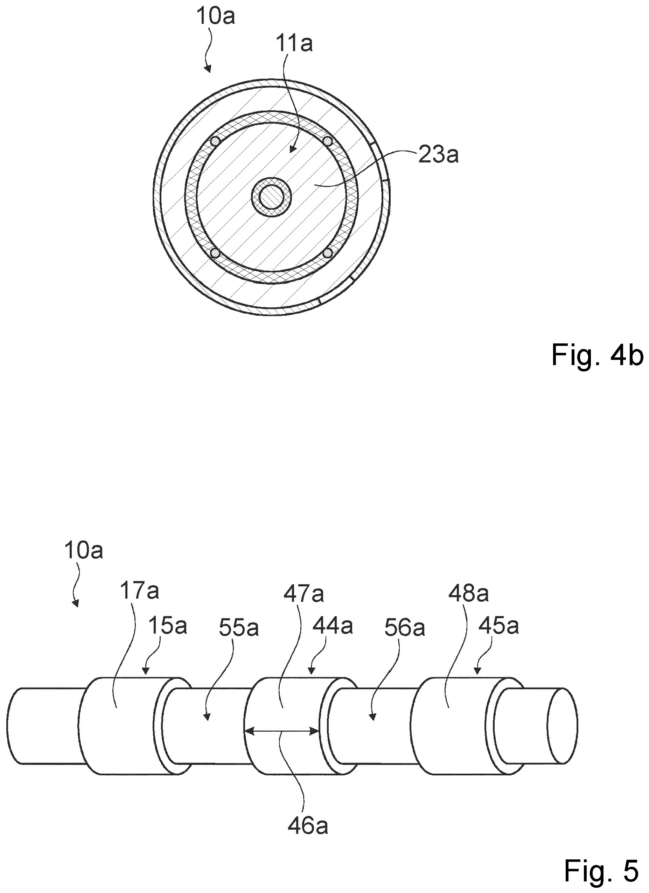

Die Fig. 3 zeigt schematisch den bereits in der Fig. 2 dargestellten Teil der Sensorvorrichtung 10a mit einer zusätzlichen Übertragungseinheit 14a. Die Sensorvorrichtung 10a weist die Übertragungseinheit 14a auf. Die Übertragungseinheit 14a ist dazu vorgesehen, ein Fluid aus einer Umgebung der Sensorvorrichtung 10a, z.B. einem Boden, in dem die Sensorvorrichtung 10a vergraben ist, aufzunehmen. Die Übertragungseinheit 14a ist dazu vorgesehen, einen Fluiddruck von der Umgebung an die Sensoreinheit 12a zu übertragen. Die Übertragungseinheit 14a ist dazu vorgesehen, den Fluiddruck zu einer Deformation des Sensorelements 13a auf die Sensoreinheit 12a zu übertragen. Die Übertragungseinheit 14a ist um den Grundkörper 11a angeordnet. Die Übertragungseinheit 14a ist um das Sensorelement 13a angeordnet. Die Übertragungseinheit 14a ist um das Mantelelement 25a angeordnet. Die Übertragungseinheit 14a liegt an der Sensoreinheit 12a an. Die Übertragungseinheit 14a liegt an dem Außenumfang der Sensoreinheit 12a an. Die Übertragungseinheit 14a ist außen an dem Mantelelement 25a angeordnet. Die Übertragungseinheit 14a kontaktiert die Sensoreinheit 12a. Die Übertragungseinheit 14a bildet einen Messbereich 15a aus. Der Messbereich 15a bildet einen Bereich aus, in dem der Fluiddruck (geschützt vom Erddruck) gemessen werden kann. Die Übertragungseinheit 14a kann eine Mehrzahl getrennter Messbereiche 15a, 44a, 45a (vgl. Fig. 5) ausbilden. Die Übertragungseinheit 14a ist in dem Messbereich 15a angeordnet. Die Übertragungseinheit 14a definiert die Ausdehnung des Messbereichs 15a. Außerhalb der Übertragungseinheit 14a / des Messbereichs 15a ist der Fluiddruck nicht unbeeinflusst von dem Erddruck messbar.

Die Übertragungseinheit 14a weist ein Aufnahmeelement 17a auf. Das Aufnahmeelement 17a umschließt den Grundkörper 11a in dem Messbereich 15a entlang einer Mittelachse 18a des Grundkörpers 11a betrachtet vollständig. Das Aufnahmeelement 17a umschließt die Sensoreinheit 12a in dem Messbereich 15a entlang der Mittelachse 18a des Grundkörpers 11a betrachtet vollständig. Das Aufnahmeelement 17a umschließt das Sensorelement 13a in dem Messbereich 15a entlang der Mittelachse 18a des Grundkörpers 11a betrachtet vollständig. Das Aufnahmeelement 17a umschließt das Mantelelement 25a in dem Messbereich 15a entlang der Mittelachse 18a des Grundkörpers 11a betrachtet vollständig. Das Aufnahmeelement 17a kontaktiert das Mantelelement 25a im Messbereich 15a. Das Aufnahmeelement 17a ist aus einem porösen Material ausgebildet. Das Aufnahmeelement 17a weist eine poröse Durchlässigkeit von mehr als 10⁻⁴ m/s auf. Das Aufnahmeelement 17a ist dazu vorgesehen, ein Fluid aufzunehmen. Das Aufnahmeelement 17a ist dazu vorgesehen, den Fluiddruck an die Sensoreinheit 12a, insbesondere das Mantelelement 25a, weiterzuleiten und/oder zu übertragen. Das Aufnahmeelement 17a weist eine Länge 46a von 10 cm bis 1 Meter auf. In einer alternativen Ausführungsform ist auch ein kontinuierliches Aufnahmeelement 17a denkbar, welches sich über die gesamte Länge der Sensorvorrichtung 10a erstreckt. Die Übertragungseinheit 14a umfasst eine Mehrzahl von Aufnahmeelementen 17a, 47a, 48a. Die Aufnahmeelemente 17a, 47a, 48a sind entlang einer Längserstreckung des Grundkörpers 11a verteilt angeordnet. (vgl. Fig. 5). Dadurch werden mehrere benachbarte Messbereiche 15a, 44a, 45a von der Sensorvorrichtung 10a ausgebildet. Die Abstände zwischen den Aufnahmeelementen 17a könnten in der alternativen Ausführungsform auch unregelmäßig ausgebildet sein.

Die Übertragungseinheit 14a weist eine Stützeinheit 19a auf. Die Stützeinheit 19a ist dazu vorgesehen, das Aufnahmeelement 17a zumindest bereichsweise gegen eine durch eine mechanische Krafteinwirkung von außen bewirkte Deformation abzuschirmen. Die Stützeinheit 19a ist an einem Außenumfang des Aufnahmeelements 17a angeordnet. Die Stützeinheit 19a umschließt das Aufnahmeelement 17a / alle Aufnahmeelemente 17a, 47a, 48a über zumindest einen Großteil des Messbereichs 15a / aller Messbereiche 15a, 44a, 45a entlang der Mittelachse 18a des Grundkörpers 11a betrachtet vollständig. Die Stützeinheit 19a weist zumindest ein Stützelement 36a auf. Die Stützeinheit 19a kann mehrere Stützelemente 36a aufweisen. Jedem der Aufnahmeelemente 17a ist wenigstens ein Stützelement 36a zugeordnet. Jedes der Aufnahmeelemente 17a wird von einem Stützelement 36a geschützt. Das Stützelement 36a ist aus einem steifen Werkstoff gefertigt. Das Stützelement 36a ist aus einem festen Material ausgebildet. Das Stützelement 36a ist aus dem Werkstoff Stahl gebildet. Alternative Werkstoffe für das Stützelement 36a sind denkbar. Die Stützeinheit 19a ist dazu vorgesehen, das Fluid von außen durch die Stützeinheit 19a hindurch an das jeweilige Aufnahmeelement 17a zu leiten.

Das Stützelement 36a weist Ausnehmungen 26a auf. Die Ausnehmungen 26a sind als Bohrungen ausgebildet. Das Stützelement 36a erstreckt sich in dem Messbereich 15a um das Aufnahmeelement 17a. Das Stützelement 36a kontaktiert das Aufnahmeelement 17a an einer Außenfläche des Aufnahmeelements 17a. Die Ausnehmungen 26a sind fluiddurchlässig ausgebildet. Die Ausnehmungen 26a sind für einen Feststoff, insbesondere ein Bodenmaterial, undurchlässig ausgebildet. Das Stützelement 36a ist dazu vorgesehen, der Sensoreinheit 12a einen Fluiddruck bereitzustellen. Das Stützelement 36a ist dazu vorgesehen, einen durch das Bodenmaterial ausgeübten mechanischen Druck von der Sensoreinheit 12a abzuschirmen. Das Stützelement 36a ist entlang der Mittelachse 18a des Grundkörpers 11a betrachtet kürzer als das Aufnahmeelement 17a.

Die Fig. 4a zeigt eine schematische Schnittansicht durch die Sensorvorrichtung 10a. Der Hohlkörper 22a weist einen Innendurchmesser 52a auf. Der Innendurchmesser 52a beträgt zwischen 4 mm und 14 mm. Im in der Fig. 4a dargestellten Beispiel beträgt der Innendurchmesser 52a des Hohlkörpers 22a 9 mm. Der Hohlkörper 22a weist eine Wandstärke 49a auf. Die Wandstärke 49a beträgt zwischen 2 mm und 4 mm. Im in der Fig. 4a dargestellten Beispiel beträgt die Wandstärke 49a des Hohlkörpers 22a 3 mm. Die Sensoreinheit 12a weist einen Außendurchmesser 51a auf. Der Außendurchmesser 51a beträgt zwischen 5 mm und 50 mm. Im in der Fig. 4a dargestellten Beispiel beträgt der Außendurchmesser 51a 14a mm. Die Sensoreinheit 12a weist eine Wandstärke 50a auf. Die Wandstärke 50a beträgt etwa 1 mm. Das Kompensationselement 20a weist einen Außendurchmesser 53a des Kunststoffmantels 43a auf. Der Außendurchmesser 53a beträgt zwischen 50 µm und 900 µm. Das Kompensationselement 20a weist einen Außendurchmesser 54a der Glasfaser (cladding) 42a auf. Der Außendurchmesser 54a beträgt zwischen 10 µm und 100 µm.

Die Fig. 4b zeigt einen Schnitt durch eine alternative Ausführungsform der Sensorvorrichtung 10a. Die Sensorvorrichtung 10a weist eine Sensoreinheit 12a auf. Die Sensorvorrichtung 10a weist einen Grundkörper 11a auf. Der Grundkörper 11a ist aus einem elastischen Vollkörper gebildet. In der alternativen Ausführungsform ist die Sensoreinheit 12a direkt auf dem Vollkörper angeordnet. Der Vollkörper ist aus einem vollständig komprimierbaren Werkstoff gebildet.

Die Fig. 5 zeigt eine schematische Darstellung der Sensorvorrichtung 10a mit segmentweiser Anordnung von Aufnahmeelementen 17a, 47a, 48a. Zwischen den Bereichen mit Aufnahmeelementen 17a,47a, 48a (den Messbereichen 15a, 44a, 45a) sind Zwischenbereiche 55a, 56a ohne Übertragungseinheiten angeordnet. In den Zwischenbereichen 55a, 56a ohne Übertragungseinheiten lastet zusätzlich ein Erddruck auf der Sensoreinheit 12a und damit auch auf dem Sensorelement 13a. Die Sensoreinheit 12a ist dazu vorgesehen, über eine Deformation des Sensorelements 13a mittels einer Kalibration für eine Stelle, an der die Übertragungseinheit 14a angeordnet ist (einer der Messbereiche 15a, 44a, 45a), und eine entlang des Grundkörpers 11a angeordnete weitere Stelle, die beabstandet von der Übertragungseinheit 14a angeordnet ist (einer der Zwischenbereiche 55a, 56a), jeweils einen auf das zumindest eine Sensorelement 13a wirkenden Fluiddruck zu ermitteln.

Die Figur 6 zeigt schematisch die Sensorvorrichtung 10a mit der Sensoreinheit 12a, wobei die Sensoreinheit 12a neben dem Sensorelement 13a ein weiteres Sensorelement 57a aufweist. Das weitere Sensorelement 57a erstreckt sich ebenfalls in dem Messbereich 15a. Das weitere Sensorelement 57a erstreckt sich ebenfalls entlang der Längserstreckung des Grundkörpers 11a helixartig um den Grundkörper 11a. Das weitere Sensorelement 57a weist einen von dem Sensorelement 13a verschiedenen Faserparameter auf. Der Faserparameter ist als eine Schlaglänge 58a, 59a ausgebildet. Das Sensorelement 13a weist eine erste Schlaglänge 58a auf. Das weitere Sensorelement 57a weist eine zweite Schlaglänge 59a auf. Die erste Schlaglänge 58a und die zweite Schlaglänge 59a sind zueinander verschieden. Die Faserparameter der Sensorelemente 13a, 57a unterscheiden sich durch den Winkel zur Umfangsrichtung. Die Faserparameter der Sensorelemente 13a, 57a unterscheiden sich durch einen Gangsteigungswinkel. Die Sensorelemente 13a, 57a sind so angeordnet, dass sich die Sensorelemente 13a, 57a kreuzen. Es ist auch denkbar, dass sich die Sensorelemente 13a, 57a aufgrund einer voneinander verschiedenen Winkelrichtung zu der Umfangsrichtung kreuzen. Es ist denkbar, dass die Sensorelemente 13a, 57a zwar eine gleiche Schlaglänge 58a, 59a aufweisen, jedoch longitudinal um einen Bruchteil der Schlaglänge 58a, 59a versetzt sind. Es ist denkbar, dass die Sensorelemente 13a, 57a weitere unterschiedliche Faserparameter aufweisen.

Die Figur 7 zeigt ein schematisches Ablaufdiagramm eines Verfahrens zur Herstellung einer Sensorvorrichtung 10a. Das Verfahren zur Herstellung der Sensorvorrichtung 10a umfasst ein Extrusionsverfahren. Alternativ ist auch eine Herstellung über ein Pultrusionsverfahren denkbar. Es ist denkbar, dass die komplette Sensorvorrichtung in einem verketteten Extrusionsverfahren hergestellt wird. Es können jedoch auch Teile der Sensorvorrichtung separat hergestellt sein. In jedem Fall wird wenigstens der Grundkörper 11a in einem Extrusionsverfahren hergestellt. Je nach Ausbildung des Grundkörpers 11a kann dieser auch in einem Koextrusionsverfahren hergestellt werden. In zumindest einem Extrusionsverfahrensschritt 28a des Verfahrens zur Herstellung der Sensorvorrichtung 10a wird ein Kunststoffrohmaterial zur Herstellung des Grundkörpers 11a einem Extrusionswerkzeug (nicht dargestellt) bereitgestellt. In dem Extrusionsverfahrensschritt 28a wird das Kunststoffrohmaterial dem Extrusionswerkzeug bei einer Extrusionstemperatur bereitgestellt. In der Ausführungsform eines mit Schaum gefüllten Innenraums 24a des Grundkörpers 11a werden dem Extrusionswerkzeug alternativ zwei Materialien bei der Extrusionstemperatur bereitgestellt. In dem Extrusionsverfahrensschritt 28a wird das Kompensationselement 20a bereitgestellt. Das Kompensationselement 20a ist bereits vorgefertigt. In zumindest einem weiteren Extrusionsverfahrensschritt 29a wird das Kunststoffrohmaterial bei der Extrusionstemperatur durch das Extrusionswerkzeug gepresst und so in die Form des Hohlkörpers 22a gebracht. Es ist denkbar, dass in dem Extrusionsverfahrensschritt 29a in einem Koextrusionsvorgang zumindest zwei verschiedene Kunststoffe, insbesondere der Hohlkörper 22a aus Kunststoff und die Füllung von dem Innenraum 24a des Grundkörpers 11a mit einem Schaum zeitgleich hergestellt werden. Bei der Formgebung des Hohlkörpers 22a kann ein Haftvermittler an den Kontaktflächen zwischen den unterschiedlichen Werkstoffen eingesetzt werden. In dem Extrusionsverfahrensschritt 29a wird während der Extrusion des Grundkörpers 11a das vorgefertigte Kompensationselement 20a miteingebracht. Dazu läuft das Kompensationselement 20a in dem Extrusionsverfahrensschritt 29a mit einer Fertigungsgeschwindigkeit des Hohlkörpers 22a mit.

In zumindest einem weiteren Verfahrensschritt 30a des Verfahrens zur Herstellung der Sensorvorrichtung 10a wird der extrudierte Grundkörper 11a gekühlt. In zumindest einem weiteren Verfahrensschritt 31a des Verfahrens zur Herstellung der Sensorvorrichtung 10a wird das Sensorelement 13a helixartig auf die Außenfläche des Grundkörpers 11a aufgebracht. Hierzu wird ein bereits vorgefertigtes helixartig gewickeltes Sensorelement 13a aufgezogen. Es könnte in einem alternativen Verfahrensschritt das Sensorelement 13a auch durch Rotation des Werkzeugs in Abhängigkeit von der Extrusionsgeschwindigkeit direkt helixartig auf den Grundkörper 11a aufgebracht werden. Das Extrusionswerkzeug könnte in dieser Verfahrensausführung als ein Radial- oder als Axialwendelverteiler ausgebildet sein. In zumindest einem weiteren Extrusionsschritt 32a des Verfahrens zur Herstellung der Sensorvorrichtung 10a wird in einem Extrusionsverfahren an einem weiteren Extrusionswerkzeug das Mantelelement 25a über das Sensorelement 13a extrudiert. In zumindest einem Verfahrensschritt 33a des Verfahrens zur Herstellung der Sensorvorrichtung 10a wird das extrudierte Mantelelement 25a gekühlt.

In zumindest einem weiteren Verfahrensschritt 34a des Verfahrens zur Herstellung der Sensorvorrichtung 10a wird das Aufnahmeelement 17a außen auf die Sensoreinheit 12a aufgebracht. In dem Verfahrensschritt 34a wird das Aufnahmeelement 17a geschlitzt und über die Sensoreinheit 12a gezogen. In einer Ausführungsform könnte der Schlitz verklebt werden. Das Aufnahmeelement 17a könnte auch in geschlitztem Zustand verbleiben. In einer Ausführungsform könnten mehrere Aufnahmeelemente 17a, 47a, 48a an dem Grundkörper 11a aufgebracht werden. Die Aufnahmeelemente 17a, 47a, 48a können in regelmäßigen, aber auch in unregelmäßigen Abständen aufgebracht werden. Die Aufnahmeelemente 17a sind dabei vorgefertigt. Alternativ ist auch eine Aufextrusion des Aufnahmeelements 17a auf die Sensoreinheit 12a denkbar. In zumindest einem weiteren Verfahrensschritt 35a des Verfahrens zur Herstellung der Sensorvorrichtung 10a wird das Stützelement 36a der Stützeinheit 19a am Außenumfang des Aufnahmeelements 17a angebracht. In dem Verfahrensschritt 35a wird das Stützelement 36a über das Aufnahmeelement 17a gezogen. In dem Verfahrensschritt 35a wird das Stützelement 36a über die Sensoreinheit 12a gezogen. Das Stützelement 36a könnte dazu beispielsweise zweiteilig montiert und dann stoffschlüssig verbunden werden. Das Stützelement 36a oder seine Ausgangsteile sind vorgefertigt. In zumindest einem weiteren Verfahrensschritt 37a wird an einem Ende der Sensorvorrichtung 10a ein Anschlusselement (nicht dargestellt) für die Auswerteeinheit 21a aufgebracht.

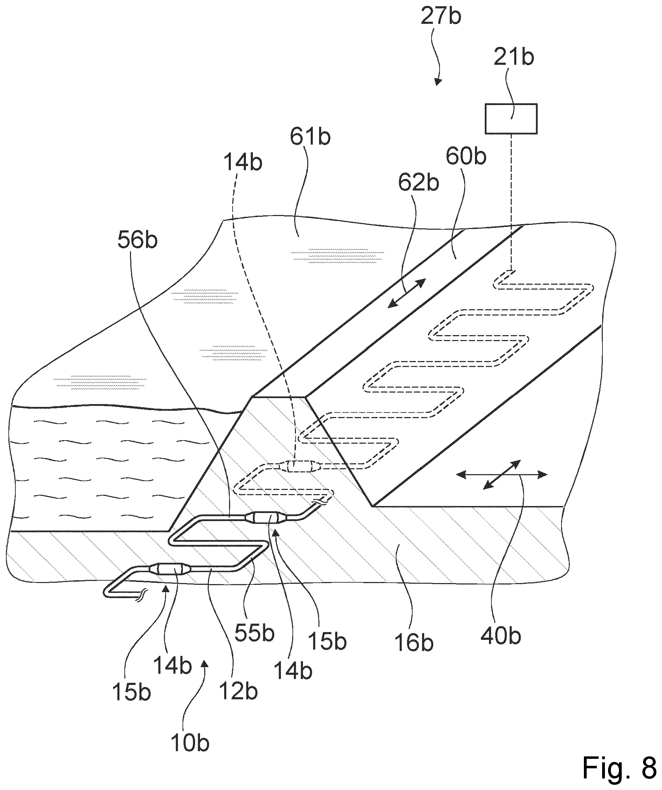

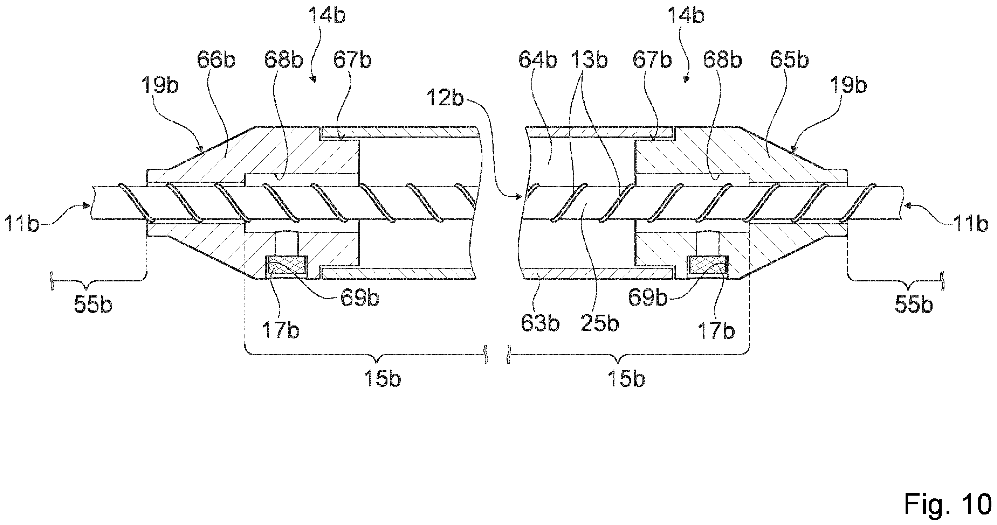

In den Figuren 8 bis 10 ist ein weiteres Ausführungsbeispiel der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des Ausführungsbeispiels der Figuren 1 bis 7 verwiesen werden kann. Zur Unterscheidung der Ausführungsbeispiele ist der Buchstabe a in den Bezugszeichen des Ausführungsbeispiels in den Figuren 1 bis 7 durch den Buchstaben b in den Bezugszeichen des Ausführungsbeispiels der Figuren 8 bis 10 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Figuren 1 bis 7 verwiesen werden.

Die Figur 8 zeigt schematisch ein Sensorsystem 27b. Das Sensorsystem 27b weist eine Sensorvorrichtung 10b auf. Im in der Fig. 8 dargestellten Fall weist das Sensorsystem beispielhaft eine Sensorvorrichtung 10b auf. Die Sensorvorrichtung 10b bildet einen ortsaufgelösten Drucksensor aus. Die Sensorvorrichtung 10b ist dazu vorgesehen, einen Fluiddruck in einem Boden 16b zu messen. Die Sensorvorrichtung 10b ist zu einer Messung von Fluiddruckveränderungen im Boden 16b vorgesehen. Die Sensorvorrichtung 10b ist zu einer Verwendung für eine Messung von Erddruckveränderungen und/oder von erddruckunabhängigen Fluiddruckveränderungen vorgesehen. Die Sensorvorrichtung 10b kann in Horizontalrichtung 40b in dem Boden 16b verlegt sein. Die in der Fig. 8 dargestellte Sensorvorrichtung 10b ist beispielhaft in Horizontalrichtung 40b unter einer Oberfläche des Bodens vergraben. Die Sensorvorrichtung 10b ist hier beispielhaft zu einer Anwendung bei einem Flussdamm 60b vorgesehen. Es wäre jedoch auch eine andere, einem Fachmann als sinnvoll erscheinende Anwendung denkbar. Der Flussdamm 60b verläuft insbesondere parallel zu einem Fluss 61b und ist von einem Erdwall gebildet. Der Flussdamm 60b weist eine Haupterstreckungsrichtung 62b auf, welche parallel zu einer Flussrichtung des Flusses 61b verläuft. Die Sensorvorrichtung 10b ist beispielhaft in Mäandern verlegt. Es wäre jedoch auch eine andere, einem Fachmann als sinnvoll erscheinende Verlegeweise denkbar. Es wäre beispielsweise auch denkbar, dass die Sensorvorrichtung 10b geradlinig, entweder parallel oder senkrecht zu einer Haupterstreckungsrichtung 62b des Flussdamms 60b verlegt ist. Die Sensorvorrichtung 10b kann vertikal und horizontal in dem Boden 16b verlegt sein. Die Sensorvorrichtung 10b kann in Kurven oder Bögen verlegt sein. Die Sensorvorrichtung 10b ist biegeschlaff ausgebildet. Das Sensorsystem 27b weist eine Auswerteeinheit 21b auf. Die Auswerteeinheit 21b ist dazu vorgesehen, das Messsignal von der Sensorvorrichtung 10b aufzunehmen und auszuwerten. Die Auswerteeinheit 21b ist dazu vorgesehen, den Fluiddruck in dem Boden 16b über eine verteilte Glasfaserabtastung zu ermitteln. Das Sensorsystem 27b ist dazu vorgesehen, ein Versagen des Flussdamms 60b zu erfassen. Vorzugsweise ist das Sensorsystem 27b dazu vorgesehen, eine Veränderung einer Sickerlinie in dem Flussdamm 60b zu ermitteln.

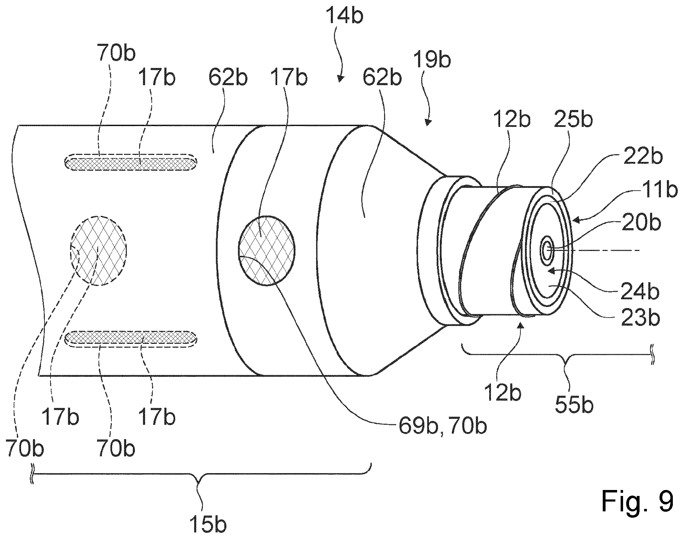

Die Figur 9 zeigt schematisch einen Teilausschnitt der Sensorvorrichtung 10b. Die Sensorvorrichtung 10b ist dazu vorgesehen, den Fluiddruck zu messen. Die Sensorvorrichtung 10b weist einen Grundkörper 11b auf. Der Grundkörper 11b umfasst einen Hohlkörper 22b. Der Hohlkörper 22b ist rohrförmig ausgebildet. Der Hohlkörper 22b ist aus einem elastischen Werkstoff gebildet. Der Hohlkörper 22b ist formstabil ausgebildet. Der Hohlkörper 22b ist aus einem Kunststoff gebildet.

Der Hohlkörper 22b bildet einen Innenraum 24b aus. Der Grundkörper 11b umfasst ein Füllelement 23b. Das Füllelement 23b ist in dem Innenraum 24b des Hohlkörpers 22b angeordnet. Das Füllelement 23b ist aus einem Faserwerkstoff, insbesondere Aramidem ausgebildet. Alternative Ausgestaltungen des Füllelements 23b, wie z.B. ein Schaumstoff oder ein Gel, sind denkbar.

Die Sensorvorrichtung 10b weist eine Sensoreinheit 12b auf. Die Sensoreinheit 12b bildet einen ortsverteilten Dehnungs-Messsensor aus. Die Auswerteeinheit 21b ist zu einer Ermittlung des Fluiddrucks in Abhängigkeit von einer Deformation eines Sensorelements 13b der Sensorvorrichtung 10b vorgesehen. Die Sensoreinheit 12b ist als eine faseroptische Sensoreinheit 12b ausgebildet. Der Grundkörper 11b ist dazu vorgesehen, die Sensoreinheit 12b aufzunehmen. Die Sensoreinheit 12b ist an einem Außenumfang des Grundkörpers 11b angeordnet. Die Sensoreinheit 12b weist zumindest ein Sensorelement 13b auf. Die Sensoreinheit 12b weist beispielhaft drei Sensorelemente 13b auf. Die Sensorelemente 13b sind als lichtleitende Fasern ausgebildet. Die Sensorelemente 13b sind als Glasfaser und/oder als Bend Optimized Fiber ausgebildet. Die Sensorelemente 13b sind am Außenumfang des Grundkörpers 11b helixartig angeordnet. Die Sensorelemente 13b erstrecken sich entlang einer Längsrichtung des Grundkörpers 11b helixartig um den Grundkörper 11b.

Das Sensorelement 13b ist dazu vorgesehen, ein Messsignal zu einer Messung des Fluiddrucks bereitzustellen. Das Sensorelement 13b erzeugt ein Messsignal, wenn ein Fluiddruck anliegt und das Sensorelement 13b durch den Fluiddruck und/oder den Erddruck gestaucht oder gedehnt wird. Das Sensorelement 13b ist kraftschlüssig mit dem Grundkörper 11b verbunden. Alternativ oder zusätzlich kann das Sensorelement 13b formschlüssig mit dem Grundkörper 11b verbunden sein. Das Sensorelement 13b ist elastisch verformbar ausgebildet. Der Grundkörper 11b und das Sensorelement 13b sind gemeinsam formelastisch ausgebildet. Die Sensoreinheit 12b weist ein Mantelelement 25b auf. Das Mantelelement 25b ist aus einem thermoplastischen Elastomer gebildet. Das Mantelelement 25b ist elastisch verformbar ausgebildet. Das Mantelelement 25b und das Sensorelement 13b sind gemeinsam formelastisch ausgebildet. Das Mantelelement 25b ummantelt den Grundkörper 11b. Das Mantelelement 25b ummantelt das Sensorelement 13b. Das Mantelelement 25b ist dazu vorgesehen, das Sensorelement 13b vor Schmutz und/oder Beschädigung und/oder Korrosion usw. zu schützen. Das Mantelelement 25b ist dazu vorgesehen, den Fluiddruck an das Sensorelement 13b zu übertragen. Das Mantelelement 25b ist wasserundurchlässig ausgebildet.

Die Sensorvorrichtung 10b weist ein Kompensationselement 20b auf. Das Kompensationselement 20b ist als lichtleitende Faser ausgebildet. Das Kompensationselement 20b ist als DTS-Temperatursensor ausgebildet. In einer alternativen Ausführung könnte das Kompensationselement 20b als DSS-Dehnungssensor ausgebildet sein.

Ferner weist die Sensorvorrichtung 10b eine Übertragungseinheit 14b auf. Die Übertragungseinheit 14b ist dazu vorgesehen, ein Fluid aus einer Umgebung der Sensorvorrichtung 10b, z.B. einem Boden, in dem die Sensorvorrichtung 10b vergraben ist, aufzunehmen und isoliert an die Sensoreinheit 12b zu übertragen. Die Übertragungseinheit 14b ist dazu vorgesehen, ein Fluid aus einer Umgebung der Sensorvorrichtung 10b, z.B. einem Boden, in dem die Sensorvorrichtung 10b vergraben ist, herauszufiltern und isoliert an die Sensoreinheit 12b zu übertragen. Die Übertragungseinheit 14b ist dazu vorgesehen, einen Fluiddruck von einem Erddruck unabhängig an die Sensoreinheit 12b zu übertragen. Die Übertragungseinheit 14b ist dazu vorgesehen, den Fluiddruck zu einer Deformation des Sensorelements 13b auf die Sensoreinheit 12b zu übertragen. Die Übertragungseinheit 14b ist um den Grundkörper 11b angeordnet. Die Übertragungseinheit 14b ist um das Sensorelement 13b angeordnet. Die Übertragungseinheit 14b ist um das Mantelelement 25b angeordnet. Die Übertragungseinheit 14b ist zumindest teilweise beabstandet radial um die Sensoreinheit 12b angeordnet. Die Übertragungseinheit 14b bildet einen Messbereich 15b aus. Der Messbereich 15b bildet einen Bereich aus, in dem der Fluiddruck (geschützt vom Erddruck) gemessen werden kann. Die Übertragungseinheit 14b kann eine Mehrzahl getrennter Messbereiche 15b ausbilden. Die Übertragungseinheit 14b ist in dem Messbereich 15b angeordnet. Die Übertragungseinheit 14b definiert die Ausdehnung des Messbereichs 15b. Außerhalb der Übertragungseinheit 14b / des Messbereichs 15b ist der Fluiddruck nicht unbeeinflusst von dem Erddruck messbar. Die Übertragungseinheit 14b bildet einen geschützten Hohlraum 64b um die Sensoreinheit 12b aus, in welchen Wasser frei von Umgebungsmaterial, wie insbesondere Erde, eindringen kann.

Die Übertragungseinheit 14b weist eine Stützeinheit 19b auf. Die Stützeinheit 19b ist dazu vorgesehen, die Sensoreinheit 12b zumindest bereichsweise gegen eine durch eine mechanische Krafteinwirkung von außen bewirkte Deformation abzuschirmen. Die Stützeinheit 19b weist ein Rohrelement 63b auf. Das Rohrelement 63b ist beispielhaft von einem festen Schlauch gebildet. Das Rohrelement 63b erstreckt sich zu der Sensoreinheit 12b beabstandet, koaxial zu der Sensoreinheit 12b. Ferner weist die Übertragungseinheit 14b zwei Abstandselemente 65b, 66b auf. Die Abstandselemente 65b, 66b sind teilweise konisch mit einer kreiszylindrischen Grundform geformt. Es wäre jedoch auch eine andere, einem Fachmann als sinnvoll erscheinende Formgebung denkbar. Die Abstandselemente 65b, 66b bestehen aus einem festen Material. Die Abstandselemente 65b, 66b sind jeweils an gegenüberliegenden Enden des Rohrelements 63b angeordnet und sind dazu vorgesehen, das Rohrelement 63b definiert zu der Sensoreinheit 12b zu beabstanden. Die Abstandselemente 65b, 66b sind jeweils von einer Hülse gebildet. Die Abstandselemente 65b, 66b weisen jeweils eine erste zylindrische Außenkontur 67b auf, deren Durchmesser einem Innendurchmesser des Rohrelements 63b entspricht. Das Rohrelement 63b ist jeweils mit den Enden auf die zylindrische Außenkontur 67b der Abstandselemente 65b, 66b aufgeschoben. Die zylindrische Außenkontur 67b ist jeweils von einer Stufe in einem Grundkörper der Abschlusselemente 65b, 66b gebildet, sodass an einem axialen Ende der zylindrischen Außenkontur 67b jeweils eine Begrenzungswand ausgebildet ist, welche einen Anschlag für das Rohrelement 62b ausbildet. Ferner weisen die Abstandselemente 65b, 66b jeweils eine zentrale, axiale Bohrung 68b auf. Die axiale Bohrung 68b dient zu einer Durchführung der Sensoreinheit 12b. Die axiale Bohrung 68b der Abstandselemente 65b, 66b weist jeweils in einem axial äußeren Bereich einen Innendurchmesser auf, welcher im Wesentlichen einem Außendurchmesser der Sensoreinheit 12b entspricht. Die Abstandselemente 65b, 66b sind dazu vorgesehen, in dem äußeren Bereich der axialen Bohrung 68b nicht weiter sichtbar gegenüber der Sensoreinheit 12b abgedichtet zu sein, um ein Eindringen von Schmutz zu verhindern. Des Weiteren weist die axiale Bohrung 68b der Abschlusselemente 65b, 66b jeweils in einem axial inneren Bereich einen Innendurchmesser auf, welcher größer ist als ein Innendurchmesser des äußeren Bereichs. Der innere Bereich der axialen Bohrung 68b der Abstandselemente 65b, 66b ist jeweils dem Hohlraum 64b zugewandt. Die axiale Bohrung 68b weist in dem inneren Bereich insbesondere einen Abstand zu der Sensoreinheit 12b auf, welcher eine Wasserführung ermöglicht. Ferner weisen die Abstandselemente 65b, 66b jeweils eine radiale Bohrung 69b auf, welche in einen inneren Bereich der jeweiligen axialen Bohrung 68b mündet.

Die Übertragungseinheit 14b weist zumindest ein Aufnahmeelement 17b auf. Die Übertragungseinheit 14b weist beispielhaft zwei Aufnahmeelemente 17b auf. Es wäre jedoch auch eine andere, einem Fachmann als sinnvoll erscheinende Anzahl an Aufnahmeelementen 17b denkbar. Die Aufnahmeelemente 17b sind jeweils von einem Filter gebildet. Die Aufnahmeelemente 17b weisen jeweils eine poröse Durchlässigkeit von mehr als 10⁻⁴ m/s auf. Die Aufnahmeelemente 17b sind dazu vorgesehen, ein Fluid aufzunehmen und durchzulassen. Die Aufnahmeelemente 17b sind dazu vorgesehen, den Fluiddruck an die Sensoreinheit 12b, insbesondere das Mantelelement 25b, weiterzuleiten und/oder zu übertragen. Die Aufnahmeelemente 17b sind jeweils in, vor oder hinter den Ausnehmungen 70b der Stützeinheit 19b angeordnet. Die Ausnehmungen 70b sind jeweils von Durchbrechungen gebildet, welche eine Umgebung mit dem geschützten Hohlraum 64b verbinden. Die Aufnahmeelemente 17b sind beispielhaft jeweils in einer der radialen Bohrungen 69b angeordnet. Alternativ wäre auch denkbar, dass die Aufnahmeelemente 17b in oder hinter den Ausnehmungen 70b in dem Rohrelement 63b angeordnet sind, wie dies in der Figur 9 gestrichelt angedeutet ist. Die Ausnehmungen 70b können dabei verschiedene Formen und Dimensionierungen aufweisen, wobei jede der Ausnehmungen 70b jeweils durch eines der Aufnahmeelemente 17b geschlossen ist. Über die Aufnahmeelemente 17b kann Fluid, insbesondere Wasser, von einem Erdreich getrennt in den Hohlraum 64b eindringen. Das Fluid, insbesondere Wasser, kann durch die Aufnahmeelemente 17b, über die radiale Bohrung 69b und über den inneren Bereich der axialen Bohrung 68b in den Hohlraum 64b eindringen. Hierdurch herrscht in dem Hohlraum 64b derselbe Fluiddruck wie in einer Umgebung der Übertragungseinheit 14b, jedoch nicht derselbe Erddruck.

Die Sensorvorrichtung 10b weist eine segmentweise Anordnung von Übertragungseinheiten 14b auf. Zwischen den Bereichen mit den Übertragungseinheiten 14b sind Zwischenbereiche 55b, 56b ohne Übertragungseinheiten 14b angeordnet. In den Zwischenbereichen 55b, 56b ohne Übertragungseinheiten 14b lastet zusätzlich ein Erddruck auf der Sensoreinheit 12b und damit auch auf dem Sensorelement 13b. Die Sensoreinheit 12b ist dazu vorgesehen, über eine Deformation des Sensorelements 13b mittels einer Kalibration für eine Stelle, an der die Übertragungseinheit 14b angeordnet ist, und eine entlang des Grundkörpers 11b angeordnete weitere Stelle, die beabstandet von der Übertragungseinheit 14b angeordnet ist, jeweils einen auf das zumindest eine Sensorelement 13b wirkenden Fluiddruck zu ermitteln.

**Bezugszeichen**

| | | | |
|---|---|---|---|
| 10 | Sensorvorrichtung | 39 | Vertikalrichtung |
| 11 | Grundkörper | 40 | Horizontalrichtung |
| 12 | Sensoreinheit | 42 | Glasfaser |
| 13 | Sensorelement | 43 | Kunststoffmantel |
| 14 | Übertragungseinheit | 44 | Messbereich |
| 15 | Messbereich | 45 | Messbereich |
| 16 | Boden | 46 | Länge |
| 17 | Aufnahmeelement | 47 | Aufnahmeelement |
| 18 | Mittelachse | 48 | Aufnahmeelement |
| 19 | Stützeinheit | 49 | Wandstärke |
| 20 | Kompensationselement | 50 | Wandstärke |
| 21 | Auswerteeinheit | 51 | Außendurchmesser |
| 22 | Hohlkörper | 52 | Innendurchmesser |
| 23 | Füllelement | 53 | Außendurchmesser |
| 24 | Innenraum | 54 | Außendurchmesser |
| 25 | Mantelelement | 55 | Zwischenbereich |
| 26 | Ausnehmung | 56 | Zwischenbereich |
| 27 | Sensorsystem | 57 | Sensorelement |
| 28 | Extrusionsverfahrensschritt | 58 | Schlaglänge |
| 29 | Extrusionsverfahrensschritt | 59 | Schlaglänge |
| 30 | Verfahrensschritt | 60 | Flussdamm |
| 31 | Verfahrensschritt | 61 | Fluss |
| 32 | Extrusionsschritt | 62 | Haupterstreckungsrichtung |
| 33 | Verfahrensschritt | 63 | Rohrelement |
| 34 | Verfahrensschritt | 64 | Hohlraum |
| 35 | Verfahrensschritt | 65 | Abstandselement |
| 36 | Stützelement | 66 | Abstandselement |
| 37 | Verfahrensschritt | 67 | Außenkontur |
| 38 | Bohrloch | 68 | Bohrung |
| 69 | Bohrung | | |
| 70 | Ausnehmung | | |

## Patentansprüche

1. Sensorvorrichtung (10a; 10b) zumindest zu einer Messung eines Fluiddrucks, mit einem Grundkörper (11a; 11b) und mit einer faseroptischen Sensoreinheit (12a; 12b), die zumindest ein als lichtleitende Faser ausgebildetes Sensorelement (13a; 13b) umfasst, welches sich entlang einer Längserstreckung des Grundkörpers (11a; 11b) zumindest abschnittsweise zumindest im Wesentlichen helixartig um den Grundkörper (11a; 11b) erstreckt, wobei eine Übertragungseinheit (14a; 14b), die in zumindest einem Messbereich (15a; 15b) um den Grundkörper (11a; 11b) und das zumindest eine Sensorelement (13a; 13b) angeordnet ist und dazu vorgesehen ist, ein Fluid aus einer Umgebung aufzunehmen und einen Fluiddruck zu einer Deformation des zumindest einen Sensorelements (13a; 13b) auf die Sensoreinheit (12a; 13b) zu übertragen, wobei die Übertragungseinheit (14a; 14b) zumindest ein Aufnahmeelement (17a; 17b) und eine Stützeinheit (19a; 19b) umfasst, wobei die Stützeinheit (19a; 19b) dazu vorgesehen ist, das zumindest eine Aufnahmeelement (17a; 17b) zumindest bereichsweise gegen eine durch eine mechanische Krafteinwirkung von außen bewirkte Deformation abzuschirmen, wobei die Stützeinheit (19a; 19b) dazu vorgesehen ist, das Fluid von außen durch die Stützeinheit (19a; 19b) hindurch an das Aufnahmeelement (17a; 17b) zu leiten, wobei die Stützeinheit (19a; 19b) Ausnehmungen (26a; 70b) aufweist, welche ausschließlich fluiddurchlässig ausgebildet sind, wobei das Aufnahmeelement (17a; 17b) durchlässig für das Fluid ist,
**dadurch gekennzeichnet, dass**
das Aufnahmeelement (17a; 17b) aus einem porösen Material ausgebildet ist.

2. Sensorvorrichtung (10a) nach Anspruch 1, **dadurch gekennzeichnet, dass** das zumindest eine Aufnahmeelement (17a) den Grundkörper (11a) und das zumindest eine Sensorelement (13a) in dem Messbereich (15a) entlang einer Mittelachse (18a) des Grundkörpers (11a) betrachtet zumindest größtenteils, insbesondere vollständig, umschließt.

3. Sensorvorrichtung (10a) nach Anspruch 1 oder 2, **dadurch gekennzeichnet, dass** die Übertragungseinheit (14) an der Sensoreinheit (12a) anliegt.

4. Sensorvorrichtung (10a; 10b) nach einem der vorhergehenden Ansprüche, **dadurch gekennzeichnet, dass** der Grundkörper (11a; 11b) und das zumindest eine Sensorelement (13a; 13b) kraft- und/oder formschlüssig miteinander verbunden sind und gemeinsam zumindest im Wesentlichen formelastisch ausgebildet sind.

5. Sensorvorrichtung (10a) nach Anspruch 1, **dadurch gekennzeichnet, dass** die Stützeinheit (19a) das zumindest eine Aufnahmeelement (17a) über zumindest einen Großteil des Messbereichs (15a) entlang einer Mittelachse (18a) des Grundkörpers (11a) betrachtet zumindest größtenteils, insbesondere vollständig, umschließt.

6. Sensorvorrichtung (10a) nach Anspruch 1, **dadurch gekennzeichnet, dass** die Stützeinheit (19a) zumindest ein Stützelement (36a) umfasst, das aus einem festen Material ausgebildet ist.

7. Sensorvorrichtung (10b) zumindest nach Anspruch 1, **dadurch gekennzeichnet, dass** die Übertragungseinheit (14b) einen geschützten Hohlraum (64b) um die Sensoreinheit (12b) ausbildet, in welchen Wasser frei von Umgebungsmaterial, wie insbesondere Erde, eindringen kann.

8. Sensorvorrichtung (10b) nach Anspruch 7, **dadurch gekennzeichnet, dass** das zumindest eine Aufnahmeelement (17b) von einem Filter gebildet ist, wobei über das zumindest eine Aufnahmeelement (17b) Fluid, insbesondere Wasser, von einem Umgebungsmaterial getrennt in den Hohlraum (64b) eindringen kann.

9. Sensorvorrichtung (10a; 10b) nach einem der vorhergehenden Ansprüche, **dadurch gekennzeichnet, dass** die Sensoreinheit (12a; 12b) einen ortsverteilten Dehnungs-Messsensor ausbildet.

10. Sensorvorrichtung (10a; 10b) nach einem der vorhergehenden Ansprüche, **gekennzeichnet durch** ein als lichtleitende Faser ausgebildetes Kompensationselement (20a; 20b), welches in oder an dem Grundkörper (11a; 11b) angeordnet ist und sich vorzugsweise zumindest im Wesentlichen parallel zu einer Längserstreckung des Grundkörpers (11a; 11b) erstreckt oder helixartig verläuft.

11. Sensorvorrichtung (10a; 10b) nach einem der vorhergehenden Ansprüche, **dadurch gekennzeichnet, dass** die Übertragungseinheit (14a; 14b) eine Mehrzahl von Aufnahmeelementen (17a; 17b) umfasst, die entlang einer Längserstreckung des Grundkörpers (11a; 11b) verteilt angeordnet sind.

12. Sensorvorrichtung (10a; 10b) nach einem der vorhergehenden Ansprüche, **dadurch gekennzeichnet, dass** die Sensoreinheit wenigstens ein als lichtleitende Faser ausgebildetes weiteres Sensorelement (57a; 57b) umfasst, welches sich zumindest in dem Messbereich (15a; 15b) entlang der Längserstreckung des Grundkörpers (11a; 11b) zumindest im Wesentlichen helixartig um den Grundkörper (11a; 11b) erstreckt und welches vorzugsweise zumindest einen von dem Sensorelement (13a; 13b) verschiedenen Faserparameter aufweist.

13. Sensorsystem (27a; 27b) zu einer Messung eines Fluiddrucks, mit zumindest einer Sensorvorrichtung (10a; 10b) nach einem der vorhergehenden Ansprüche und mit einer Auswerteeinheit (21a; 21b) zu einer Ermittlung des Fluiddrucks in Abhängigkeit von einer Deformation eines Sensorelements (13a; 13b) der Sensorvorrichtung (10a; 10b), wobei die Auswerteeinheit (21a; 21b) dazu vorgesehen ist, den Fluiddruck mittels des Sensorelements (13a; 13b) über eine verteilte Glasfaserabtastung zu ermitteln.

14. Verwendung einer Sensorvorrichtung (10a; 10b) nach einem der Ansprüche 1 bis 12 und/oder eines Sensorsystems (27a; 27b) nach Anspruch 13 zu einer Messung von Fluiddruckveränderungen und/oder Erddruckveränderungen, insbesondere in einem Boden (16a; 16b).

15. Verfahren zu einer Herstellung einer Sensorvorrichtung (10a; 10b) nach einem der Ansprüche 1 bis 12.

16. Verfahren nach Anspruch 15, **dadurch gekennzeichnet, dass** zumindest der Grundkörper (11a; 11b) in einem Extrusionsverfahren, insbesondere Koextrusionsverfahren hergestellt wird, wobei während der Extrusion des Grundkörpers (11a; 11b) einer, insbesondere vorgefertigte, Kompensationselement (20a; 20b) der Sensorvorrichtung (10a; 10b) miteingebracht wird.

## Claims

1. A sensor device (10a; 10b) at least for measuring a fluid pressure, having a base body (11a; 11b) and having a fibre-optic sensor unit (12a; 12b), which comprises at least one sensor element (13a; 13b) which is in the form of a light-conducting fibre and which extends along a longitudinal extension of the base body (11a; 11b) at least in sections at least substantially helically around the base body (11a; 11b), wherein a transmission unit (14a; 14b) which is arranged in at least one measuring range (15a; 15b) around the base body (11a; 11b) and the at least one sensor element (13a; 13b) and is configured to receive a fluid from an environment and to transmit a fluid pressure to the sensor unit (12a; 13b) for deformation of the at least one sensor element (13a; 13b), wherein the transmission unit 14a; 14b) comprises at least one receiving element (17a; 17b) and a support unit (19a; 19b), wherein the support unit (19a; 19b) is configured to shield the at least one receiving element (17a; 17b) at least in regions against deformation caused by a mechanical action of force from the outside, wherein the support unit (19a; 19b) is configured to conduct the fluid from the outside through the support unit (19a; 19b) to the receiving element (17a; 17b), wherein the support unit (19a; 19b) has recesses (26a; 70b) which are of exclusively fluid-permeable design, wherein the receiving element (17a; 17b) is permeable for the fluid,
**characterized in that** the receiving element (17a; 17b) is formed from a porous material.

2. The sensor device (10a) according to claim 1, **characterized in that** the at least one receiving element (17a), when viewed along a central axis (18a) of the base body (11a), at least for the most part, in particular completely, encloses the base body (11a) and the at least one sensor element (13a) in the measuring range (15a).

3. The sensor device (10a) according to claim 1 or 2, **characterized in that** the transmission unit (14) abuts against the sensor unit (12a).

4. The sensor device (10a; 10b) according to one of the preceding claims, **characterized in that** the base body (11a; 11b) and the at least one sensor element (13a; 13b) are connected to one another in a force-fitting and/or form-fitting manner and are jointly at least substantially of elastic form.

5. The sensor device (10a) according to claim 1, **characterized in that** the support unit (19a), when viewed along a central axis (18a) of the base body (11a), at least for the most part, in particular completely, encloses the at least one receiving element (17a) over at least a majority of the measuring range (15a).

6. The sensor device (10a) according to claim 1, **characterized in that** the support unit (19a) comprises at least one support element (36a) which is formed from a solid material.

7. The sensor device (10b) at least according to claim 1, **characterized in that** the transmission unit (14b) forms a protected hollow space (64b) around the sensor unit (12b), into which water can penetrate free of surrounding material, such as in particular soil.

8. The sensor device (10b) according to claim 7, **characterized in that** the at least one receiving element (17b) is formed by a filter, wherein fluid, in particular water, can penetrate into the hollow space (64b) separately from a surrounding material via the at least one receiving element (17b).

9. The sensor device (10a; 10b) according to one of the preceding claims, **characterized in that** the sensor unit (12a; 12b) forms a location-distributed strain sensor.

10. The sensor device (10a; 10b) according to one of the preceding claims, **characterized by** a compensation element (20a; 20b) which is formed as a light-conducting fibre, is arranged in or on the base body (11a; 11b) and preferably extends at least substantially parallel to a longitudinal extension of the base body (11a; 11b) or runs helically.

11. The sensor device (10a; 10b) according to one of the preceding claims, **characterized in that** the transmission unit (14a; 14b) comprises a plurality of receiving elements (17a; 17b) which are arranged distributed along a longitudinal extension of the base body (11a; 11b).

12. The sensor device (10a; 10b) according to one of the preceding claims, **characterized in that** the sensor unit comprises at least one further sensor element (57a; 57b) which is formed as a light-conducting fibre, extends at least substantially helically around the base body (11a; 11b) at least in the measuring range (15a; 15b) along the longitudinal extension of the base body (11a; 11b) and preferably has at least one fibre parameter which is different from the sensor element (13a; 13b).

13. A sensor system (27a; 27b) for measuring a fluid pressure, having at least one sensor device (10a; 10b) according to one of the preceding claims and having an evaluation unit (21a; 21b) for determining the fluid pressure as a function of a deformation of a sensor element (13a; 13b) of the sensor device (10a; 10b), wherein the evaluation unit (21a; 21b) is configured to determine the fluid pressure by means of the sensor element (13a; 13b) via a distributed glass fibre scanning.

14. A use of a sensor device (10a; 10b) according to one of claims 1 to 12 and/or of a sensor system (27a; 27b) according to claim 13 for measuring fluid pressure changes and/or earth pressure changes, in particular in a soil (16a; 16b).

15. A method for manufacturing a sensor device (10a; 10b) according to one of claims 1 to 12.

16. The method according to claim 15, **characterized in that** at least the base body (11a; 11b) is manufactured in an extrusion process, in particular a coextrusion process, wherein during the extrusion of the base body (11a; 11b) a, in particular prefabricated, compensation element (20a; 20b) of the sensor device (10a; 10b) is also introduced.

## Revendications

1. Dispositif de capteur (10a; 10b) au moins pour une mesure d'une pression de fluide, comprenant un corps de base (11a; 11b) et comprenant une unité de capteur à fibre optique (12a; 12b) qui comprend au moins un élément de capteur (13a; 13b) réalisé sous forme de fibre conductrice de lumière, lequel s'étend le long d'une étendue longitudinale du corps de base (11a; 11b) au moins par sections au moins sensiblement de manière hélicoïdale autour du corps de base (11a; 11b), où une unité de transmission (14a; 14b) qui est disposée dans au moins une zone de mesure (15a; 15b) autour du corps de base (11a; 11b) et de l'au moins un élément de capteur (13a; 13b) et qui est prévue pour recevoir un fluide provenant d'un environnement et pour transmettre une pression de fluide à l'unité de capteur (12a; 13b) pour une déformation de l'au moins un élément de capteur (13a; 13b), l'unité de transmission (14a; 14b) comprenant au moins un élément de réception (17a; 17b) et une unité de support (19a; 19b), l'unité de support (19a; 19b) étant prévue pour protéger l'au moins un élément de réception (17a; 17b) au moins par zones contre une déformation provoquée par une force mécanique exercée de l'extérieur, l'unité de support (19a; 19b) étant prévue pour conduire le fluide de l'extérieur à travers l'unité de support (19a; 19b) jusqu'à l'élément de réception (17a; 17b), l'unité de support (19a; 19b) présentant des évidements (26a; 70b) qui sont réalisés exclusivement de manière perméable aux fluides, l'élément de réception (17a; 17b) étant perméable au fluide,
**caractérisé en ce que** l'élément de réception (17a; 17b) est réalisé à partir d'un matériau poreux.

2. Dispositif de capteur (10a) selon la revendication 1, **caractérisé en ce que** l'au moins un élément de réception (17a) entoure au moins en grande partie, en particulier complètement, le corps de base (11a) et l'au moins un élément de capteur (13a) dans la zone de mesure (15a), vu le long d'un axe central (18a) du corps de base (11a).

3. Dispositif de capteur (10a) selon la revendication 1 ou 2, **caractérisé en ce que** l'unité de transmission (14) s'applique contre l'unité de capteur (12a).

4. Dispositif de capteur (10a ; 10b) selon l'une quelconque des revendications précédentes, **caractérisé en ce que** le corps de base (11a; 11b) et l'au moins un élément de capteur (13a; 13b) sont connectés l'un à l'autre par engagement par force et/ou par complémentarité de forme et sont réalisés ensemble au moins sensiblement de manière élastique en forme.

5. Dispositif de capteur (10a) selon la revendication 1, **caractérisé en ce que** l'unité de support (19a) entoure au moins en grande partie, en particulier complètement, l'au moins un élément de réception (17a) sur au moins une grande partie de la zone de mesure (15a), vu le long d'un axe central (18a) du corps de base (11a).

6. Dispositif de capteur (10a) selon la revendication 1, **caractérisé en ce que** l'unité de support (19a) comprend au moins un élément de support (36a) qui est réalisé à partir d'un matériau solide.

7. Dispositif de capteur (10b) au moins selon la revendication 1, **caractérisé en ce que** l'unité de transmission (14b) réalise une cavité protégée (64b) autour de l'unité de capteur (12b), dans laquelle de l'eau peut pénétrer sans matériau environnant, comme en particulier de la terre.

8. Dispositif de capteur (10b) selon la revendication 7, **caractérisé en ce que** l'au moins un élément de réception (17b) est formé par un filtre, du fluide, en particulier de l'eau, pouvant pénétrer dans la cavité protégée (64b) séparément d'un matériau environnant par le biais de l'au moins un élément de réception (17b).

9. Dispositif de capteur (10a; 10b) selon l'une quelconque des revendications précédentes, **caractérisé en ce que** l'unité de capteur (12a; 12b) réalise un capteur de mesure d'allongement réparti localement.

10. Dispositif de capteur (10a; 10b) selon l'une quelconque des revendications précédentes, **caractérisé par** un élément de compensation (20a; 20b) réalisé sous forme de fibre conductrice de lumière, qui est disposé dans ou sur le corps de base (11a; 11b) et s'étend de préférence au moins sensiblement parallèlement à une étendue longitudinale du corps de base (11a; 11b) ou s'étend de manière hélicoïdale.

11. Dispositif de capteur (10a; 10b) selon l'une quelconque des revendications précédentes, **caractérisé en ce que** l'unité de transmission (14a; 14b) comprend une pluralité d'éléments de réception (17a; 17b) qui sont disposés de manière répartie le long d'une étendue longitudinale du corps de base (11a; 11b).

12. Dispositif de capteur (10a; 10b) selon l'une quelconque des revendications précédentes, **caractérisé en ce que** l'unité de capteur comprend au moins un élément de capteur supplémentaire (57a; 57b) réalisé sous forme de fibre conductrice de lumière, qui s'étend au moins sensiblement de manière hélicoïdale autour du corps de base (11a; 11b) au moins dans la zone de mesure (15a; 15b) le long de l'étendue longitudinale du corps de base (11a; 11b) et qui présente de préférence au moins un paramètre de fibre différent de l'élément de capteur (13a; 13b).

13. Système de capteur (27a; 27b) pour une mesure d'une pression de fluide, comprenant au moins un dispositif de capteur (10a; 10b) selon l'une quelconque des revendications précédentes et comprenant une unité d'évaluation (21a; 21b) pour une détermination de la pression de fluide en fonction d'une déformation d'un élément de capteur (13a; 13b) du dispositif de capteur (10a; 10b), l'unité d'évaluation (21a; 21b) étant prévue pour déterminer la pression de fluide au moyen de l'élément de capteur (13a; 13b) par le biais d'un balayage de fibre optique réparti.

14. Utilisation d'un dispositif de capteur (10a; 10b) selon l'une quelconque des revendications 1 à 12 et/ou d'un système de capteur (27a; 27b) selon la revendication 13 pour une mesure de variations de pression de fluide et/ou de variations de pression de terre, en particulier dans un sol (16a; 16b).

15. Procédé de fabrication d'un dispositif de capteur (10a ; 10b) selon l'une quelconque des revendications 1 à 12.

16. Procédé selon la revendication 15, **caractérisé en ce qu'**au moins le corps de base (11a; 11b) est fabriqué dans un procédé d'extrusion, en particulier un procédé de coextrusion, un élément de compensation (20 ; 20b), en particulier préfabriqué, du dispositif de capteur (10a; 10b) étant introduit conjointement pendant l'extrusion du corps de base (11a; 11b).
